# EUROPEAN PATENT APPLICATION

(11) **EP 2 068 471 A1**
(43) Date of publication of application: **10.06.2009**
(21) Application number: 07425774.2
(22) Date of filing: 06.12.2007
(51) Int. Cl.: H04J 3/06

(54) **Method for emulating digital trunk TDM services over synchronous ethernet packets**

(71) Applicant: Nokia Siemens Networks S.p.A., 20126 Milano (IT)
(72) Inventor: Bottiroli, Andrea, 20060 Gorgonzola (MI) (IT)
(74) Representative: Fischer, Michael

(57) **Abstract**

In a Metropolitan Ethernet Network (MEN) with upgraded transport capability encompassing Circuit Emulation Service (CES) at the Interworking Interfaces within backhaul nodes, a substantial improvement has been introduced which consists of fixing a constant cadence of the TDM payloads packets in the whole network. In this way the design of Jitter buffer at the MEN bound is made uniform everywhere. This also entails constant time duration of all TDM payloads packets and hence constant number of octets for a given type of TDM service. These features are more easily achieved by distributing a common synchronization signal SYNC with constant period in the whole network, planned preferably as 125, or 250, or 500 µs in order to accommodate the following most popular tributaries:
• DS1 (T1) at 1.544 Mbit/s as defined in ANSI (T1.102) and (T1.107);
• E1 at 2.048 Mbit/s as defined in ITU-T Recommendations (G.702) and (G.704);
• N x 64kbit/s data (i.e. 64 kbit/s, 128 kbit/s, 192 kbit/s) such as defined in ITU-T Recommendation (1.231.1);
• DS3 (T3) at 44.736 Mbit/s as defined in ANSI (T1.107);
• E3 at 34.368 Mbit/s as defined in ITU-T Recommendation (G.751);

Tributary frames are firstly synchronized to a local clock by means of conventional positive/negative justification technique based on elastic store and bit-stuffing, then the residual space to the end of the packet is filled up with optional Reed-Solomon error correcting code opportunely shortened. Different combinations of TDM payloads are possible (fig.13a,b).

## Description

### FIELD OF THE INVENTION

The present invention relates to a method for providing emulation of circuit switched services through data packets exchanged at the network interface of backhaul nodes which provide digital trunk TDM services at the interfaces to end systems. Metropolitan Ethernet Networks (MEN) are the preferred target networks of the invention.

In order to simplify the disclosure, **APPENDIX 1** of Tables, **APPENDIX 2** of useful Bibliographic References [....], and **APPENDIX 3** of acronyms are annexed at the description.

### BACKGROUND ART

"Circuit Emulation Services Over Ethernet" (CESoE) has become an increasingly important technology, as carriers worldwide begin deploying Metro Ethernet Networks (MEN) to address business customer demands for faster and less expensive data and voice transport. As these metro Ethernet networks proliferate, carriers are finding increasing demand for not just customer data traffic, but also for their existing profitable TDM traffic, be it PBX trunks or private-line services. In addition, cable and wireless operators see an increased need for circuit emulation in their networks as they migrate their infrastructures to support multiple services over packet transport and look to reduce costs associated with backhaul.

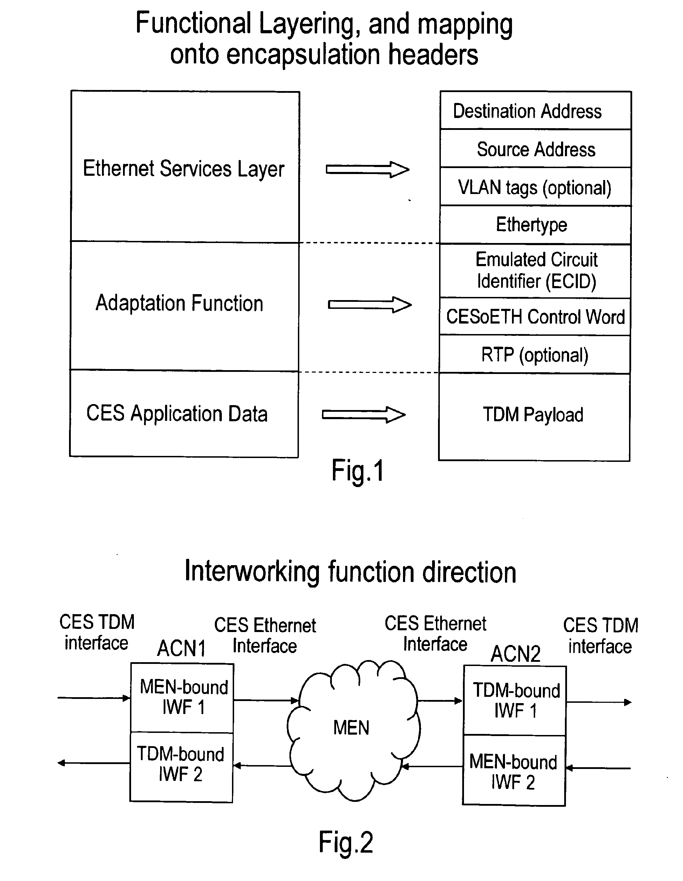

Circuit Emulation Services over Ethernet (CESoETH) uses a point-to-point connection between two CES interworking functions. Essentially it uses the MEN as an intermediate network (or "virtual wire") between two TDM networks. This is handled as an application layer function in terms of layered network model defined in [MEF 4]. The CES IWF provides the adaptation of the CES application to the Ethernet services layer. The use of a VLAN tag is optional, and is restricted to the underlying MEN transport functions. This functional layering is shown in **fig.1****,** with mapping onto the various encapsulation headers.

With reference to **fig.2****,** we see a MEN connected to two access nodes ACN1 and ACN2 at its two sides for providing a circuit emulation service, consisting of two symmetrical data flows in opposite directions. Without limitation, each access node is a backhaul node interfaced to the customer TDM equipments through CES TDM Interface and to the MEN through CES Ethernet interface. Both the interfaces are bidirectional. Each access node ACN1, ACN2 is equipped with means for providing a pair of CES interworking functions:
- the MEN-bound IWF along the direction from CES TDM Interface to CES Ethernet interface; it handles the packetization of the TDM data, encapsulation into Ethernet frames and forwarding into the Ethernet network.
- the TDM-bound IWF along the direction from CES Ethernet interface to CES TDM Interface; it extracts the TDM data from the Ethernet frames, and recreates the TDM service.

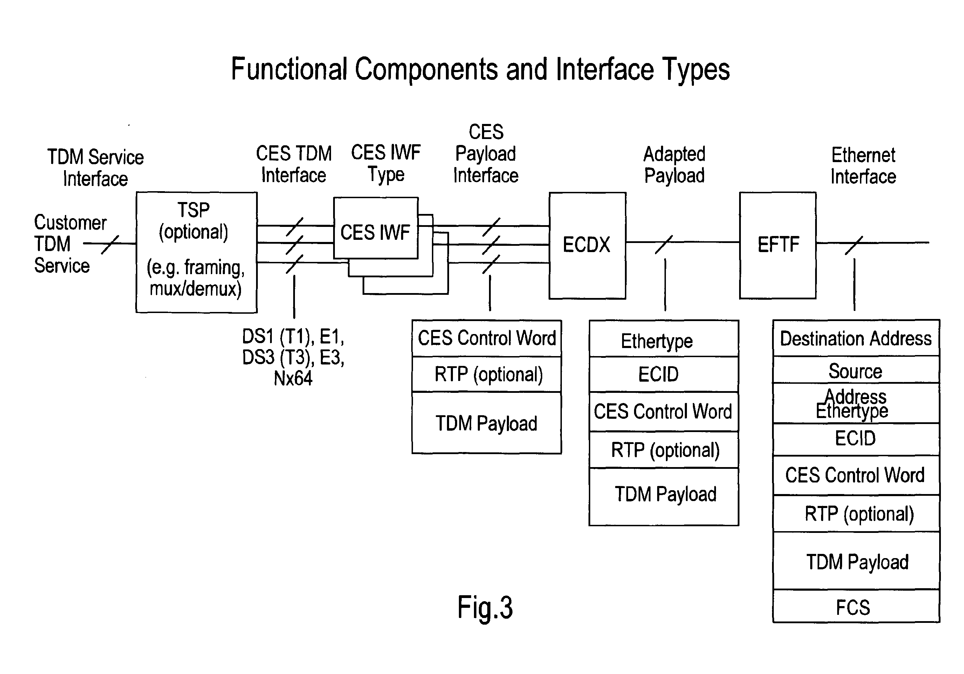

With reference to **fig.3****,** the chain of functional blocks and relevant interfaces included in each ACN1 and ACN2 node includes: TDM Service Processor (TSP) (optional), Circuit Emulation Inter-working Function (CES IWFs), Emulated Circuit Demultiplexer (ECDX), and Ethernet Flow Termination Function (EFTF). Each of these blocks is bound by two respective interfaces, namely:
- TSP, between TDM Service Interface and CES TDM Interface;
- CES IWF, between CES TDM Interface and CES Payload;
- ECDX, between CES Payload and Adapted Payload Interface;
- EFTF, between Adapted Payload and Ethernet Interface.

As far as the TDM packet moves forward to the MEN, its header length increases due to new added information elements (IE). Conversely, the length of header progressively decreases on the opposite direction. In detail: at CES TDM Interface the following TDM standard flows are indicated: DS1 (T1), E1, DS3 (T3), E3, Nx64. At CES Payload the packet includes: CES Control Word, RTP [RFC 3550] (optional), TDM Payload. At Adapted Payload Interface two fields called Ethertype and ECID are on the top. At Ethernet Interface two other field Destination Address and Source Address are on the top. Each new field is added or stripped according to the direction of the information packet.

In operation, TSP is an optional component that operates on the TDM Service Interface to produce the service that is to be emulated across the MEN (and vice versa). For example, it may terminate framing overhead, or multiplex several customer TDM services into a single service to be emulated. It operates in the TDM domain, and may make use of standard or proprietary techniques. The TSP is considered part of an equipment vendor's own value added function, and its operation is not covered by any implementation agreement. The TSP's interfaces consist of the following:
1. TDM Service Interface: the TDM service that is handed off to the customer or TDM network operator. TDM services may be transported in two ways, *structure-agnostic* (where any underlying structure is ignored by the transport mechanism) and *structure-aware* (where the underlying structure is exploited by the transport mechanism).
2. CES TDM Interface: the actual circuit service that is emulated between interworking functions through the MEN. For example, emulation covers the following CES TDM Interface types:
   - DS1 at 1.544 Mbit/s as defined in ANSI [T1.102] and [T1.107],
   - E1 at 2.048 Mbit/s as defined in ITU-T Recommendations [G.702] and [G.704],
   - N x 64 kbit/s data (i.e. 64 kbit/s, 128 kbit/s, 192 kbit/s) such as defined in ITU-T Recommendation [I.231.1],
   - DS3 at 44.736 Mbit/s as defined in ANSI [T1.107],
   - E3 at 34.368 Mbit/s as defined in ITU-T Recommendation [G.751].

For the structure-agnostic emulation of TDM service, the CES TDM Interface carries all information provided by the TDM Service Interface transparently. The service is emulated in its entirety by the IWF, including any framing structure or overhead present. For the structure-aware emulation of TDM service, the TDM service interface is operated on by the TSP to produce the service that is to be emulated across the MEN. A single structured TDM service may be decomposed into one or many CES flows, or two or more structured TDM services may be combined to create a single CES flow. Multiple CES IWFs may use one Ethernet interface, and the flows are multiplexed and demultiplexed using the ECDX (Emulated Circuit De/Multiplexing Function). This functions in the packet domain, and interfaces the CES payload with the EFTF (Ethernet Flow Termination Function), which handles the MAC layer information.

CES IWF is defined as the adaptation function that interfaces the CES application to the Ethernet layer. In terms of the diagram of **fig.3****,** it handles the emulation of the service presented at the CES TDM Interface. The CES IWF is responsible for all the functions required for the emulated service to function. This includes the following:
- Encapsulation and decapsulation,
- Payload formation and extraction,
- Synchronization,
- Carriage of TDM signalling and alarms,
- Error Response and Defect Behaviour
- TDM performance monitoring.

ECDX is a function, operating in the packet domain, that in the MEN-bound direction:
- Prepends to every Ethernet frame sent to the MEN an Emulated Circuit Identifier (ECID) attribute that is unique to the TDM-bound CES IWF.
- Assigns the Ethertype field to each Ethernet frame sent to the MEN.
- In the TDM-bound direction, the ECDX:

- Determines the destination CES IWF of each Ethernet frame from the ECID value
- Strips the Ethertype and ECID fields, before handing off the CES Payload to the CES IWF.
- The interfaces to the ECDX consist of the following:

- CES Payload (i.e. packetised TDM payload, CES control word, optional RTP header [ RFC 3550].
- Adapted Payload (i.e. the CES Payload, plus the ECID and Etherype fields).

EFTF takes an adapted payload from the ECDX (the MAC client information field), along with an Ethertype attribute describing it as CES payload. It then adds:
- the MAC Destination and Source addresses;
- optional VLAN tag (if required) and associated Tag ID and User Priority information;
- any padding required to meet the minimum Ethernet frame size;
- the frame check sequence (FCS).

In the TDM-bound direction, the EFTF takes in an Ethernet frame from the MEN, and checks the FCS, discarding the frame if it is incorrect. It determines whether it contains CES payload from the Ethertype field, and forwards it to its associated ECDX function, for passing to the appropriate CES IWF.

The interfaces to the EFTF consist of the following:
- Adapted Payload (i.e. the CES Payload, plus the ECID and Etherype fields);
- Ethernet Interface (standard IEEE 802.3 interface).

In common with IETF practice, the protocols described in the following are in "network-byte-orde", where bit 0 is the most significant bit, and the bytes are transmitted most significant byte first (i.e. left to right in the following figures). This consists of a standard layer-2-compliant Ethernet MAC header, added by the EFTF component. The assignment of the Ethernet source address is a matter of local policy. It is permitted for several IWFs to share a single Ethernet MAC sub-layer, or for each IWF to operate its own MAC sub-layer. The Ethernet destination address is set to the MAC address of the destination IWF. Since the CESoETH adaptation function operates directly on top of the Ethernet layer without any intervening protocols, a separate "Ethertype" value must be allocated for CESoETH, in order to identify the protocol to a receiving device. The IEEE has assigned Ethertype 0x88d8 to identify Ethernet frames performing this CESoETH adaptation function.

There are three components to the adaptation function header:
3. Emulated Circuit Identifier - identifies the emulated circuit being carried. This separates the identification of the emulated circuit from the Ethernet layer, allowing the MEN operator to multiplex several emulated circuits across a single EVC where required. This is added by the ECDX.
4. CESoETH control word - provides sequencing and signalling of defects such as AIS of the TDM circuit, or packet loss detected in the MEN. This is added by the CES IWF.
5. Optional RTP header - Where appropriate, timing and sequencing may be provided by using the Real-time Transport Protocol, RTP [RFC 3550]. The default case is not to use RTP. This is added by the CES IWF.

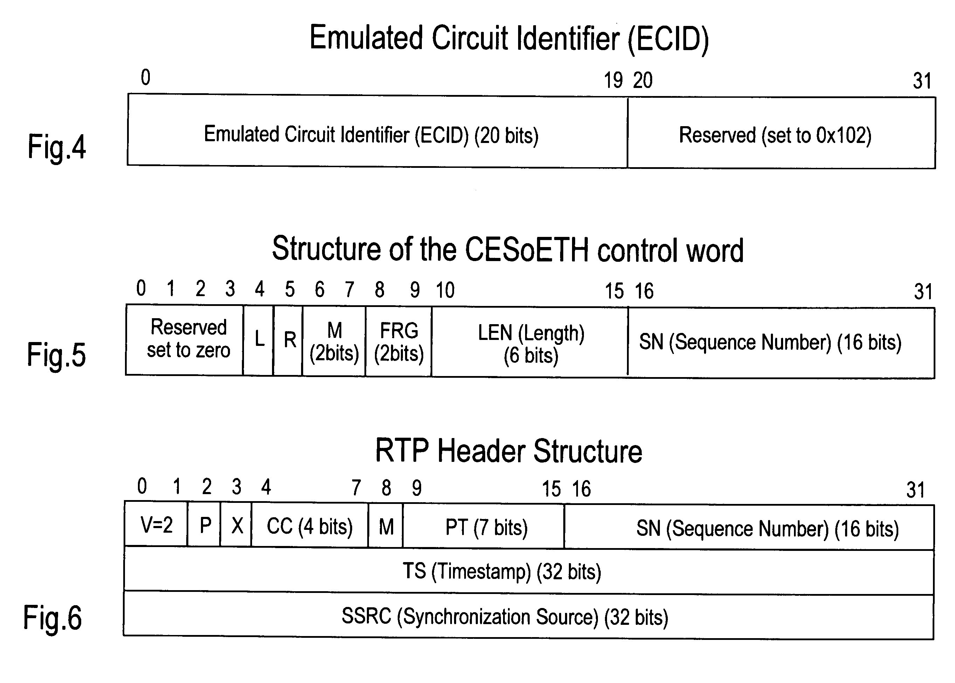

With reference to **fig.4****,** the emulated circuit identifier (ECID) consists of a single, 20-bit unsigned binary field containing an identifier for the circuit being emulated. This is added by the ECDX. Emulated circuit identifiers have local significance only, and are associated with a specific MAC address. Therefore, an emulated circuit may be given different ECIDs for each direction of the circuit. ECIDs are selected during the creation of an emulated circuit.

Emulated circuit identifiers have local significance only, and are associated with a specific MAC address. Therefore, an emulated circuit may be given different ECIDs for each direction of the circuit. ECIDs are selected during the creation of an emulated circuit.

With reference to **fig.5****,** the CESoETH control word is added by the TDM-bound IWF. Its structure follows that described for the common interworking indicators in [Y.1413]. In this diagram:
- L Local TDM failure - when set, indicates that the MEN-bound IWF has detected or has been informed of a TDM defect impacting the TDM data. When the L bit is set the contents of the frame may not be meaningful, and the payload may be suppressed in order to conserve bandwidth.
- R Remote Loss of Frames indication - when set by a MEN-bound IWF, the R bit indicates that its local TDM-bound IWF is not receiving frames from the MEN, and consequently has entered a Loss of Frames State (LOFS). Thus the setting of the R bit indicates failure of the connection in the opposite direction. This may indicate MEN congestion or other network related faults.
- M Modifier bits - set by the MEN-bound IWF to supplement the meaning of the L bit, as shown in **Table 1**.
- FRG Fragmentation bits - This field is used for fragmenting multiframe structures into multiple CESoETH frames. The field is used as shown in **Table 2**.
- LEN Length - This is an unsigned binary number indicating the length of the payload, should the CESoETH frame require padding to meet the minimum frame size of 64 octets. The length of the payload is defined as the sum in octets of the following quantities:
   a) size of the CESoETH control word (4 octets);
   b) size of the optional RTP header (12 octets, if present);
   c) size of the TDM payload.
   Where the length equals or exceeds 42 octets, the Length field shall be set to zero. Therefore a non-zero length field indicates the presence of padding. (Note: the payload length does not include the size of the ECID).
- SN Sequence number - a 16 bit unsigned binary number which increments by one for each frame sent. It wraps to zero, in common with the behavior of the RTP sequence number. The receiving IWF uses it primarily to detect frame loss and to restore frame sequence.

As indicated in **fig.6****,** in case of RTP the CESoETH uses the fields of the RTP header [RFC 3550] in conjunction with at least the following modes of timestamp generation:
- Absolute mode: the MEN-bound IWF sets timestamps using the clock recovered from the incoming TDM circuit. As a consequence, the timestamps are closely correlated with the sequence numbers. All CESoETH implementations that support RTP must support this mode.
- Differential mode: The two IWFs at either end of the emulated circuit have access to the same high-quality synchronization source (SSRC) [RFC 3550], and this synchronization source is used for timestamp generation. As a consequence, the second derivative of the timestamp series represents the difference between the common timing source and the clock of the incoming TDM circuit. Support of this mode is optional.

As far as TDM payload is concerned, Implementation Agreement proposed by MEF [MEF 8]. covers four payload formats:
1. Structure-agnostic emulation
2. Octet-aligned payload for structure-agnostic emulation of DS1 circuits
3. Structure-aware emulation using structure-locked encapsulation
4. Structure-aware emulation using structure-indicated encapsulation

Structure-agnostic emulation is the transport of unstructured TDM, or of structured TDM when the structure is completely disregarded by the transport mechanism. It maintains the precise bit sequence of data and any structure overhead that may be present, and provides no mechanisms for the location or utilization of a Frame Alignment Signal (FAS). This implementation agreement defines the structure-agnostic emulation of the following TDM services:
- DS1, as defined in [G.702, T1.102]
- E1, as defined in [G.702]
- DS3, as defined in [G.702, T1.102]
- E3, as defined in [G.751]

The payload format is as described in [Y.1413], sub-clause 9.1. Moreover, the following additional requirements also apply, CESoETH implementations must support at least the following TDM payload sizes where the indicated services are offered:
- E1: 256 octets
- DS1: 192 octets
- E3: 1024 octets
- DS3: 1024 octets.
The use of any other TDM payload size is optional.

DS1 circuits may be delivered to the ingress IWF padded to an integer number of octets, as described in [G.802] Annex B. This padded data may be transported directly over the MEN using a payload format that consists of an integer number of 25-octet sub-frames, each sub-frame consisting of 193 bits of TDM data and 7 bits of padding. This is described in [Y.1413], sub-clause 9.1.1.

Structure-aware emulation is the transport of structured TDM taking at least some level of the structure into account. It is not required to carry all bits of the TDM bit-stream over the MEN; specifically, the FAS may be stripped at ingress and regenerated at egress. This implementation agreement defines the structure-aware emulation of the following TDM services using a "structure-locked" encapsulation, as described in [Y.1413], sub-clause 9.2.1:
- N x 64kbit/s "basic service".
- N x 64kbit/s service with Channel Associated Signalling (CAS) for the following specific TDM trunk types:

- DS1 with framing according to the Extended Super Frame (ESF) format, as described in [T1.107] or 24 frame multiframe as described in [G.704].
- DS1 with framing according to the Super Frame (SF) format, as described in [T1.107] or 12 frame multiframe as described in [G.704].
- E1 with framing according to the CRC-4 Multiframe format, as described in [G.704].

The structure-aware emulation using "structure-indicated" encapsulation implements the following TDM services, as described in [Y.1413], sub-clause 9.2.2:
- N x 64kbit/s "basic service".
- N x 64kbit/s service with Channel Associated Signalling (CAS) for the following specific TDM trunk types:

- DS1 with framing according to the Extended Super Frame (ESF) format, as described in [T1.107] or 24 frame multiframe as described in [G.704].
- DS1 with framing according to the Super Frame (SF) format, as described in [T1.107] or 12 frame multiframe as described in [G.704].
- E1 with framing according to the CRC-4 Multiframe format, as described in [G.704].

This encapsulation first adapts the TDM bit stream using AAL Type 1, as defined in [I.363.1 and [ATM-CES].

### Synchronization

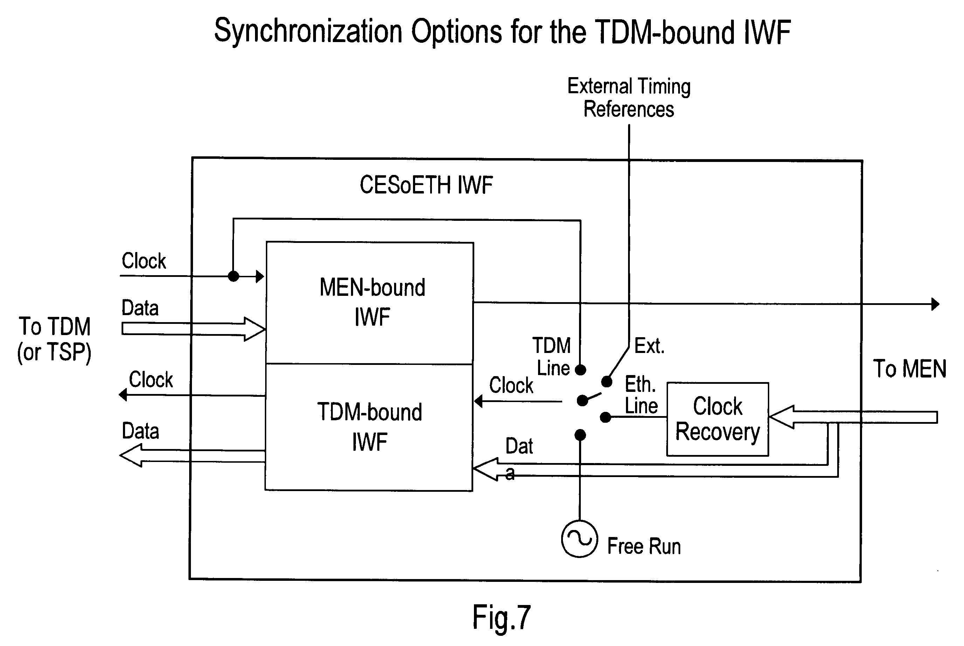

Synchronization is an important consideration in any circuit emulation scheme. Put simply, the clock used to play out the data at the TDM-bound IWF must be the same frequency as the clock used to input the data at the MEN-bound IWF, otherwise frame slips will occur over time. Architectures for synchronization and clock recovery are discussed in more detail in [MEF 3]. Summarizing for the CESoETH shown in **fig.7****,** there are four basic options for the TDM clock to the TDM-bound IWF:
- use the clock from the incoming TDM line (TDM line timing);
- use an external reference clock source (External timing);
- use a free-running oscillator (Free run timing);
- recovering the clock from the Ethernet interface (Ethernet line timing).

The last option, Ethernet line timing, covers all methods where information is extracted from the Ethernet, including:
- "adaptive timing", where the clock is recovered from data in the CESoETH frames, and the arrival time of the frames;
- "differential timing", where the clock is recovered from a combination of data contained in the CESoETH frames, and knowledge of a reference clock common to both the MEN-bound and TDM-bound IWFs. Such a reference may be distributed by a variety of means.

For maximum applicability, it is recommended that CESoETH implementations should support at least TDM line, external and adaptive timing. This will enable the implementation to be used in the majority of timing scenarios. However, not every combination of timing options for the TDM-bound IWFs on either side of the MEN will yield performance capable of meeting the traffic interface requirements specified in ITU-T recommendations [G.823] for E1 and E3 circuits, and [G.824] for DS1 and DS3 circuits, so care must be taken to ensure the combinations chosen are appropriate.

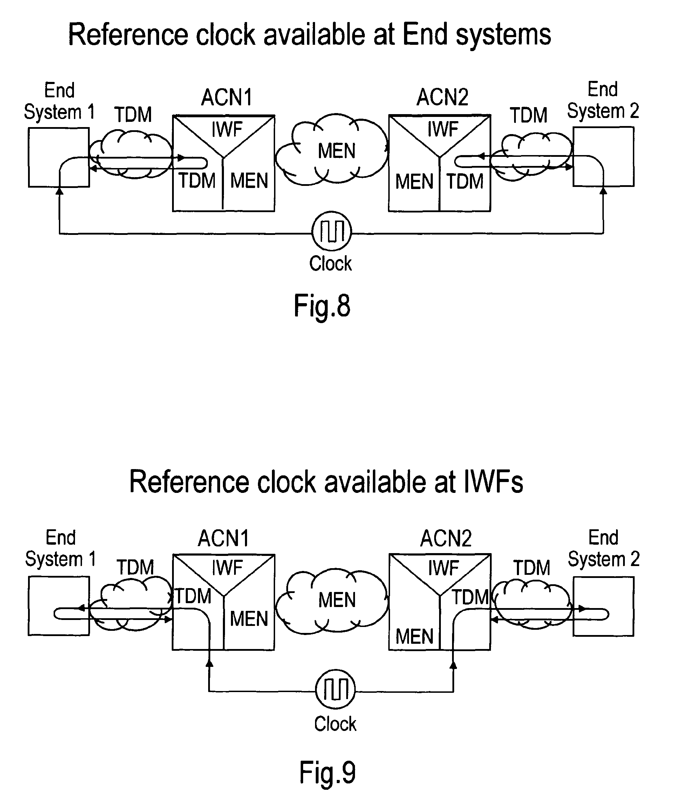

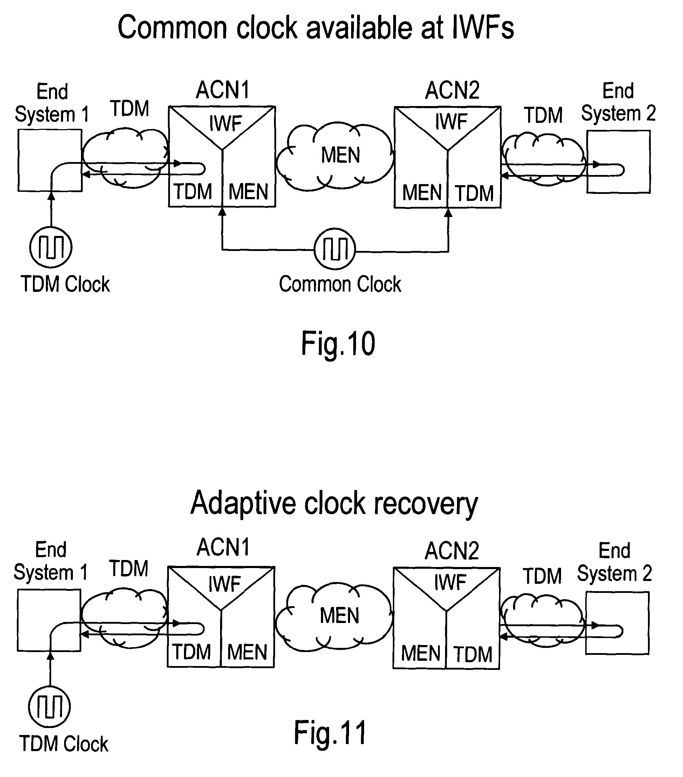

TDM networks are synchronous and hierarchically distribute precise timing in order to maintain the required error performance. MEN networks, not having been designed for TDM transport, have no inherent timing distribution mechanism, and so some other method of timing distribution must be provided. Four principal timing distribution scenarios may be identified, that differ in the availability and placement of timing sources. The selection of timing distribution mechanism may be made independently per TDM-MEN interworking bound. For timing aspect of TDM networks four timing distribution scenarios are indicated in the following clauses:
- Reference clock available at the TDM end systems **(****fig.8****).**
- Reference clock available at the IWFs **(****fig.9****).**
- Common clock available at IWFs **(****fig.10****).**
- Adaptive clock recovery **(****fig.11****).**

**Fig.8** depicts the scenario wherein two TDM End systems 1 and 2 share a reference clock. Alternatively, primary reference clocks may be available at both sites, and due to their accuracy the two clocks may be considered identical. In this scenario, each end system uses the reference clock to generate the timing used to transmit TDM data towards the IWF of its own access node ACN1 or ACN2. The IWFs slave their timing circuitry to this TDM input when transmitting TDM towards the end systems.

**Fig.9** depicts the scenario wherein two IWFs of access nodes ACN1 and ACN2, respectively, share a reference clock. Each IWF uses the reference clock to generate the timing used to transmit TDM data towards the End system. End systems 1 and 2 slave their timing circuitry to this TDM input when transmitting TDM towards the IWF. A scenario wherein one TDM network functions according to the preceding clause and the other according to this clause is also possible.

**Fig.10** depicts the scenario wherein one of the TDM end systems is required to slave its timing circuitry to that of the other, and the IWFs of both access nodes ACN1 and ACN2 share a common clock independent of the TDM timing. In this case the relationship between the frequencies of the master TDM clock and the common clock may be encoded in some manner, and transmitted across the packet network. The master frequency can then be regenerated at the remote IWF by modifying the common clock frequency based on the encoded relationship received. Two mechanisms for encoding the relationship between the TDM clock to be recovered and the common reference clock are well known. The SRTS mechanism described in ITU-T Rec. I.363.1 encodes the residual of the ratio between the reference and TDM frequencies, while RTP timestamps may be used to encode the difference between the master TDM clock and the common reference. In a variation of this scenario both TDM end systems may have accurate, but independent, source clocks and both IWFs may independently derive their clocks based on the encoded relationship received.

**Fig.11** depicts the adaptive clock recovery scenario wherein one of the TDM end systems, e.g. end system 2, is required to slave its timing circuitry to that of the other, and no common reference clock is available. In this case an adaptive clock recovery function must be used at the egress IWF of both access nodes ACN1 and ACN2. The adaptive clock recovery function utilizes only observable characteristics of the packets arriving through the MEN network, such as the precise time of arrival of the packet, to the IWF and the fill-level of the jitter buffer as a function of time. Due to the packet delay variation in the MEN network, filtering processes that combat the statistical nature of the observable characteristics must be employed. Frequency Locked Loops (FLL) and Phase Locked Loops (PLL) are well suited for this task. In a variation of this scenario both TDM end systems 1 and 2 may have accurate, but independent, source clocks and both IWFs may utilize adaptive clock recovery.

### OUTLINED TECHNICAL PROBLEM

Known embodiments in emulation of circuit switched TDM services in traditional packet data networks, such as Ethernet or IP, are not optimal because of packet data with variable length is admitted. The variability of packet lengths makes the design of jitter buffers at the CES packet network interfaces very problematic. In fact, the variability on Time of Arrivals (TOA) of packets is correlated to the packet lengths, because of the length of jitter buffer shall be varied accordingly an unique criterion to correctly design the jitter buffer in the whole network does not actually exist.

### OBJECT AND SUMMARY OF THE INVENTION

In view of the state of the art described, it is an object of the present invention to provide a criterion of uniformity to compensate the variability in time of arrivals of packets.

The invention achieves said object by providing a method for emulating circuit switched services through a packet data network capable of handling packets with variable length, wherein the circuit switched services avails of digital transport flows arranged in sequential TDM frames; the method including the following steps executed at a backhaul node constituting an access point to the network for ingress of packets:
- providing a periodic synchronization signal having a period kept constant in the whole network;
- writing sequentially into an elastic store bits of TDM frames provided with bit-stuffing signalling bits for synchronizing sequential reads of bits from the elastic store timed by a local clock;
- mapping at least a synchronized TDM frame into a fixed-length packet handled by the network having a time duration equal to said period kept constant along the whole network;
- storing into a FIFO buffer memory the packet data so obtained and delivering the stored packets to the network interface at the rate of said periodic synchronization signal, as disclosed in claim 1.

According to a complementary aspect of the invention, the following steps are executed at a backhaul node constituting an access point to the network for egress of packets:
- providing a periodic synchronization signal having said period kept constant in the whole network;
- accumulating outgoing packets from the network into a FIFO buffer memory and reading out them at the rate of said periodic synchronization signal;
- writing sequentially into an elastic store bits of said synchronized TDM frame and reading de-stuffed bits sequentially from the elastic store using a clock with smoothed gaps generated by a voltage controlled oscillator belonging to a phase-locked loop.

Other features of the invention which are considered to be novel are set forth in depended claims.

According to another aspect of the invention, the method also includes distributing in the whole network said periodic synchronization signal with constant period.

According to another aspect of the invention, when the synchronization signal is not available at the egress point of the network, the method also includes recovering said periodic synchronization signal with constant period at the egress point of the network by averaging among times of arrival of the packets.

According to another aspect of the invention, the method also includes setting with constant length in the whole network said FIFO buffer located at the egress point.

According to another aspect of the invention, the method also includes filling up with error correcting code the residual fixed-length packet space after the synchronized TDM frame.

According to another aspect of the invention, the method also includes planning said period kept constant in the whole network as multiple of a basic TDM frame duration, this allows to accommodate multiple sequential TDM frames into a packet with length kept constant along the whole network. Profitably, said period kept constant in the whole network should be planned as 125, 250, and 500 µs, so as to meet with standard tributary frames, e.g.: E1, DS1, E3, DS3, Nx64 kbit/s, offering various opportunities for accommodating multiple basic TDM frames. System Information messages that are usually broadcasted inside the network should be used to set the constant packet cadence or change it.

Other object of the invention is a packet data network operating according to the method described above for providing emulation of circuit switched services through data packets exchanged with fixed cadence at the network interface of backhaul nodes, which provide TDM digital trunk services at the interfaces to end systems, as disclosed in the relevant independent claim.

The above description is based on the assumption that a fixed and well known frequency of packets is sent by every IWF ingress/egress node inside the network. This leads to the fact that also in receiving side the same frequency of packet must be received (e.g.: 8, 4, 2 kpac/s). This fact permits to easily resolve the problem of jitter compensation in the incoming packets. In fact packets can be memorized inside a store memory when they arrived and extracted, re-sequenced with the same transmitting packet rate. On the other hand, sending a fixed length packet with a fixed packet frequency means fix the payload throughput. The insertion of one asynchronous TDM signal into a fixed payload throughput must therefore be obtained with the positive/negative justification method. The strategy of the invention is put in practice for mapping the most popular frames of tributaries into packets of fixed time duration.

Some benefits are related to the usage of FFP-IWF in comparison with current IWF for CESoE purpose introduced by Metro Ethernet Forum (MEF). Since the whole Circuit Emulated Signals share the same Ethernet packet frequency, This leads to only one SYNC signal needs of being recovered, independently by amount of original TDM signals. Moreover, resynchronization of packet at the TDM bound IWF permits the usage of unique circuitry, in time multiplexed mode, for customer data recovery. This permits hardware reduction. Finally, jitter performance on customer data recovered depends only on jitter on SYNC signal and not on its delay.

### BRIEF DESCRIPTION OF THE DRAWINGS

The invention and its advantages may be understood with reference to the following detailed description of an embodiment thereof taken in conjunction with the accompanying drawings given for purely non-limiting explanatory purposes and wherein:
- **fig.1** shows a functional layering diagram of circuit emulation service over Ethernet (CESoETH) packets according to known MEF specifications;
- **fig.2** shows bidirectional interworking paths and interfaces involved with circuit emulation service of fig.1;
- **fig.3** shows all functional elements involved with interworking interfaces of fig.2;
- **figures 4, 5, and 6** show various headers used for CESoETH;
- **fig.7** shows a diagram of several synchronization options for TDM-bound IWF visible in fig.2;
- **figures 8, 9****,** **10,** and **11** show diagrams of several synchronization options of fig.7 extended to both end systems engaged with CESoETH;
- **fig.12** shows a general diagram of the CES IWF component of fig.3 implemented according to the method of the invention for exchanging fixed frequency packet (FFP) payloads over ETH;
- **fig.13a** shows a diagram of the MEN bound block of fig.12 for an available common SYNC option;
- **fig.13b** shows a diagram of the TDM bound block of fig.12 for an available common SYNC option;
- **fig.14a** shows a diagram of the MEN bound block of fig.12 when common SYNC is unavailable;
- **fig.14b** shows a diagram of the RX IWF block of fig.12 when common SYNC is unavailable;
- **figures 15** and **16** show several formats of physical data packets (PDP) usable as CES Payloads;
- **fig.17** shows the structure of different bytes composing the CES Payloads;
- **fig.18** shows the circuital structure responsive for CRC-4 field;
- **figures 19** to **26** show E1/T1 tributaries diversely mapped into E1/T1 fixed frequency packets to obtain different constant frame durations;
- **figures 27** to **30** show E1/T1 tributaries mapped into E1/T1 fixed frequency packet with 125 µs frame duration.

### DETAILED DESCRIPTION OF AN EMBODIMENT OF THE INVENTION

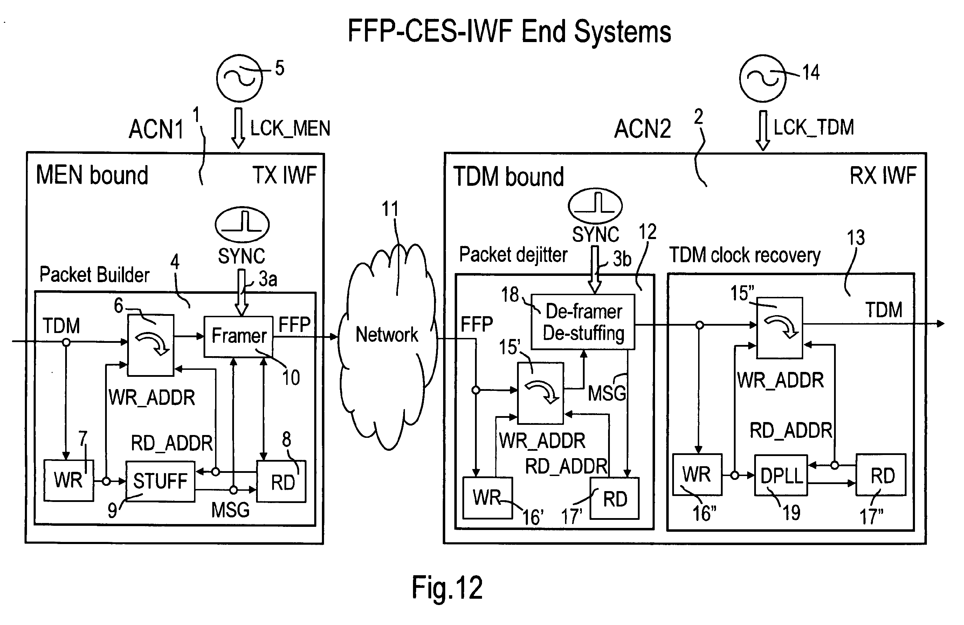

In fig.12 we see a CES IWF block diagram (fig.3) embodied to provide a "fixed frequency packet circuit emulation service interworking function" (FFP-CES-IWF) described below. For simplicity, one only direction of transmission is shown, namely, MEN bound IWF 1 of ACN1 (fig.10) towards TDM bound IWF 2 of ACN2 through the Network 11. In this direction the TDM bound IWF 1 (not represented) and its MEN bound implement a transmission scheme TX IWF, while the MEN bound IWF 2 (not represented) of ACN2 and its TDM bound implement a reception scheme RX IWF. Packet transmission only takes place from MEN bound IWF to TDM bound IWF. In fig.12 TX IWF and RX IWF are timed by respective synchronization signals SYNC 3a and SYNC 3b. Without limitation, SYNC 3a is considered either a common or local SYNC; while SYNC 3b is considered either a common or recovered SYNC. The circuitry needed to implement the FFP-CES-IWF is located at every backhaul node constituting an access point to the MEN for ingress and egress of packets. The responsibility of these nodes is of networks operators.

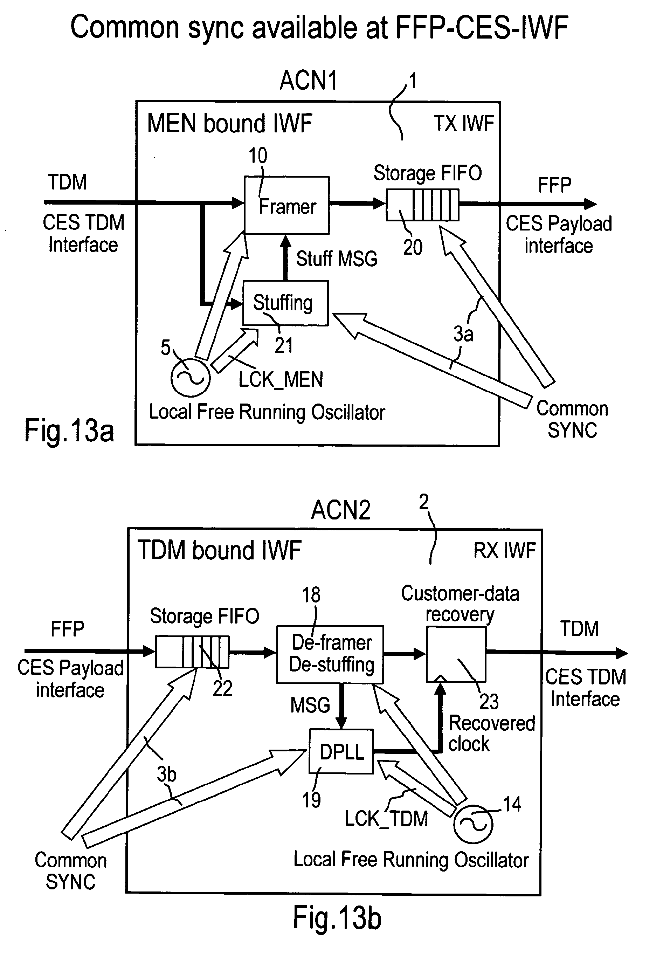

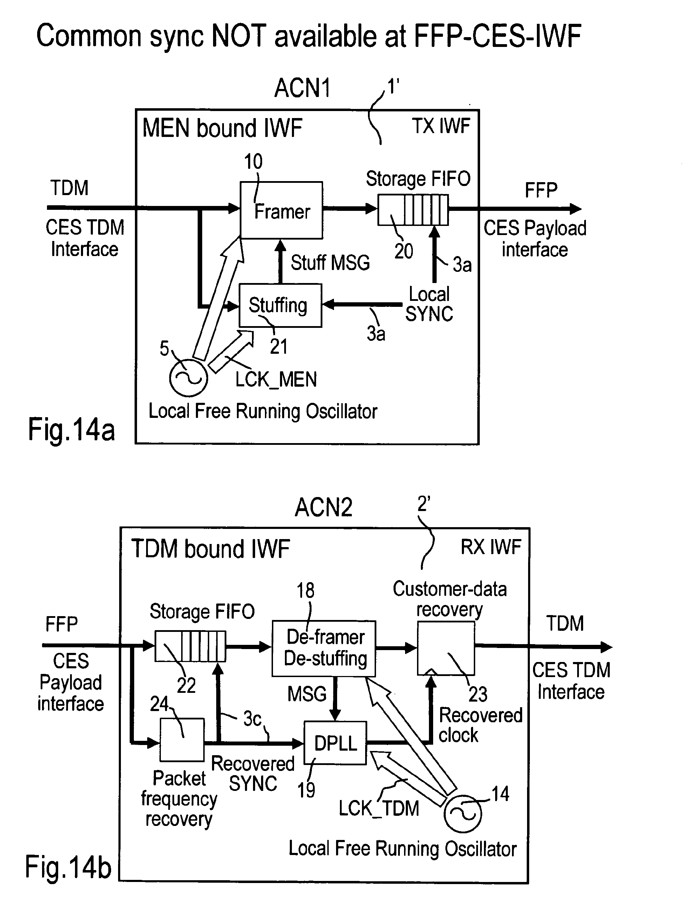

With reference to **fig.12** (left part), block TX IWF comprises a Packet builder 4, timed by SYNC 3a and by a clock signal LCK-MEN generated by a local free running oscillator 5. Details on timing are clarified in **figures 13a** and **14a**. In its turn, Packet builder 4 includes an elastic store 6, a WR address generator 7, a RD address generator 8, a generator 9 of stuffing messages MSG, and a Framer 10 cascaded to the elastic store 6. The WR generator 7 generates write addresses WR_ADDR for writing into the elastic store 6. The RD generator 8 generates read addresses RD_ADDR for reading from the elastic store 6. The elastic store 6 is a dual-port RAM managed as a FIFO to accommodate plesiochronous clocks.

An incoming TDM signal according to a selected standardization reaches the input of both the elastic store 6 and WR_ADDR generator 7. Address WR_ADDR at the output of generator 7 reaches the writing address of memory 6 and an input of stuff block 9. The RD_ADDR address at the output of generator 8 reaches the read address input of memory 6 and another input of stuff block 9. The latter generates at its output a stuffing signal MSG directed to the framer 10 and to the RD_ADDR generator 8. The framer 10, timed by SYNC signal 3a and controlled by signal MSG, accommodates the TDM signal outputted by the elastic store 6, builds up Fixed Frequency Packets FFP transmitted towards the Ethernet Network 11, and controls the RD address generator 8 to increment the address RD_ADDR.

With reference to **fig.12** (right part), means RX IWF are ideally subdivided into a Packet dejitter 12 and a TDM clock recovery 13; these blocks are timed by SYNC 3b and by a clock signal LCK-TDM generated by a local free running oscillator 14. Details on timing are clarified in the **figures 13b** and **14b**. Conceptually, some functional blocks are duplicated and indicated either with simple or double apostrophe. This artifice allows to stress the twofold behaviour of TDM bound block 2 as performing packet dejittering and TDM clock recovering. The Packet dejitter 12 includes: an elastic store 15', a WR addresses generator 16', a RD addresses generator 17', and a De-Framer and De-stuffing 18 cascaded to the elastic store 15'. The WR generator 16' generates write addresses WR_ADDR for writing into the elastic store 15'. The RD generator 17' generates read addresses RD_ADDR for reading from the elastic store 15'.

Packet dejitter 12 receives the Fixed Frequency Packets (FFP) from the Ethernet Network 11 and forwards them to the input of the elastic memory 15' and to a WR_ADDR generator 16'. The address WR_ADDR at the output of generator 16' reaches the writing address input of memory 15'. The RD_ADDR at the output of generator 17' reaches the reading address input of memory 15'. The De-Framer and De-stuffing 18, timed by SYNC signal 3b, accommodates the packets outputted by the elastic store 15', disassembles it and generates a de-stuffing signal MSG directed to the reading address generator 17'. The TDM signal at the output of block 18 is forwarded to the TDM clock recovery block 13. The latter ideally includes a replica 16", 17", and 15" of corresponding blocks 16', 17', and 15,' plus a Digital Phase Locked Loop (DPLL) 19. The DPLL 19 receives the WR_ADDR signal at one input and the RD_ADDR signal at another input, and outputs RD_ADDR RD directed to both elastic store 15" and block 17". The elastic store 15" addressed by both WR_ADDR and RD_ADDR outputs the TDM signal corresponding to the former one transmitted through the Ethernet network 11.

When one of the TDM end systems 1, 2 (**fig.10**) is required to slave its timing circuitry to that of the other, and the IWFs share a common SYNC independent of the TDM timing, the relationship between the frequencies of the master TDM clock and the common SYNC is encoded and this code enters a message periodically transmitted across the packet network. The master TDM clock frequency can then be regenerated at the remote IWF by modifying the local clock frequency based on the encoded relationship received and the common SYNC.

Inside FFP-IWF, the mechanism for encoding the relationship between the TDM clock to be recovered and the local reference clock is based on well known stuffing mechanism. The most important benefit derived from using this method is related to the fact the difference in time of arrival of the SYNC at the different equipment doesn't affect the clock recovery performance. In fact, these performances are only affected by SYNC frequency accuracy; to be precise, while a difference on times of arrival of SYNC signal doesn't affect customer-data recovery performances as these are related to jitter on SYNC signal. In other word, clock recovery procedure has been divided into two steps. The first one permits dejitter packet TOAs, while the second one consists in classical clock recovery based on stuffing criteria. The operation of SYNC distribution can be done by means of Network Time Protocol (NTP) or Global Positioning System (GPS).

**Fig.13a** shows the completion of MEN bound of **fig.12** with a FIFO memory 20 cascaded to the Framer 10 for outgoing FFP packets. Framer 10 is further connected to a Stuffing block 21 which summarizes blocks 6, 7, 8, 9, and 10 (fig.12). SYNC 3a (so as 3b) is a synchronization signal distributed along the MEN, accessible to the MEN bound independently of the LCK_MEN clock. SYNC 3a sets a constant cadence of CES Ethernet packets along the whole network. Three options are proposed for this cadence: 125, 250, or 500 µs as a matter of design convenience. SYNC 3a times both storage FIFO 20 and Stuffing block 21. Local LCK_MEN times both Framer 10 and Stuffing block 21. Local LCK_MEN is a clock faster than the bitrate of incoming TDM tributary. Local LCK_MEN is slaved to SYNC 3a.

Operatively, MEN-bound TX IWF 1 is responsible for:
- framing operation (packetization),
- stuffing operation,
- fixed frequency packet generation (fixed cadence or constant time duration).

Framing operation assembles a TDM payload with header bytes and FCS to form an Ethernet packet, as indicated in **fig.3****.** Possible formats of TDM payload will be described soon. With reference to **Table 3**, stuffing bits (S1, S2) are managed in accordance with Stuff message MSG (M1, M2) sent by stuffing block 21. The latter writes the incoming TDM bits into the elastic store 6 with a clock derived from the incoming signal, and read out them with local clock LCK_MEN; the comparison between read and write addresses determines the content of message MSG used by Framer 10 for positively or negatively justify the tributary frames. This allows adapting asynchronous tributary frames to synchronous TDM payloads. Tributary frames entering Framer 10 are assembled into the selected POP format of TDM payload that will be described soon. Every PDP is completed with header bytes of the Ethernet interface and stored in FIFO memory 20. The Ethernet packets are read out of FIFO 20 and transmitted at the fixed rate of common SYNC 3a. This lead to a fix packet frequency generation at the CES Payload interface **(****fig.3****)** and therefore in the whole network.

The operations described above are realized by a circuit implementing the block scheme represented in **figures 12** (left part) and **13a**, starting from both LCK_MEN and common SYNC clocks. From the combined teaching derivable from the description of these figures, the various formats of physical data packets that will be illustrated successively, plus common knowledge on positive/negative justification techniques for synchronizing plesiochronous signals, the one skilled in the art is sufficiently instructed to obtain the relevant circuital implementation.

**Fig.13b** shows the completion of TDM bound of **fig.12** (right part) with a storage FIFO 22 placed upstream the "De-Framer and De-stuffing" block 18. A Customer-data recovery block 23 is placed downstream block 18. SYNC 3b is a synchronization signal distributed along the MEN, accessible to the TDM bound independently of the LCK_TDM clock. Common SYNC 3b times both incoming storage FIFO 22 and DPLL 19. Local LCK_TDM times both De-framer De-stuffing 18 and DPLL 19. The DPLL 19, controlled by stuff message MSG, recovers the master TDM clock and provides the Customer data recovery block 23 with it.

Operatively, the storage FIFO 22 is a jitter buffer that accumulates FFP frames coming from the CES Payload interface. Data is played out of the jitter buffer 22 onto the TDM bound at constant SYNC 3b rate. Finally De-framer and De-stuffing block 18 in conjunction with DPLL 19 permit customer-data recovery with a surviving jitter and wander in accordance with ITU-T and ANSI standards.

The main purpose of jitter buffer 22 is to smooth out variations in time of arrival of CESoETH frames. The delay through this buffer needs to be as small as possible, in order to reduce latency of the TDM service, but large enough to absorb frame delay variations (FDV), namely, the "frame jitter" of incoming Ethernet packets. The *Jitter Buffer Overrun* condition occurs when the jitter buffer at the TDM bound RX IWF cannot accommodate the newly arrived valid CESoETH frame in its entirety, e.g. due to insufficient storage space. The *Jitter Buffer Underrun* condition occurs when there is no correctly received CESoETH payload ready to be played out on the CES-TDM interface, and replacement data must be played out instead. Primarily this occurs due to frames lost in the MEN, or discarded due to error conditions.

De-framer 18 disassembles the CES payload so as to decode the stuff message MSG and the other signalling bits. Based on decoding of MSG, the LCK-TDM clock is de-stuffed in order to read the synchronized information bits correctly. Both de-stuffed LCK-TDM clock and the output signal of a VCO belonging to a PLL reaches the two inputs of a phase comparator which generates an error signal. The error signal is low-pass filtered and used to control the VCO.

In summary, TDM-bound RX IWF 2 is responsible for:
- packet jitter compensation,
- de framing operation (De-packetization),
- de-Stuffing operation,
- TDM signal dejittering operation,
- customer data recovery.

These operations are realized by a circuit implementing the block scheme represented in **figures 12** (right part) and **13b**, starting from both LCK_TDM clock and SYNC 3b synchronization signal. From the combined teaching derivable from the description of these figures, the various formats of physical data packets that will be illustrated successively, plus common knowledge on positive/negative justification techniques for synchronizing plesiochronous signals, the one skilled in the art is sufficiently instructed to obtain the relevant circuital implementation.

**Figures 14a** and **14b** differ from corresponding **figures 13a** and **13b** by the only fact that a synchronization SYNC signal is not available at the TDM bound RX IWF. With reference to **fig.14a**, the MEN bound IWF 1' avails of a synchronization signal SYNC 3a locally available. With reference to **fig.14b**, the TDM bound IWF 2' includes a Packet frequency recovery block 24 which receives the FFP CES packets at the CES Payload interface and recovers a SYNC signal 3c starting from the measurement of the times of arrival of the CES packets. A possibility is that the period of the regenerated SYNC 3c is the average of the times of arrival times calculated on a significant number of packets.

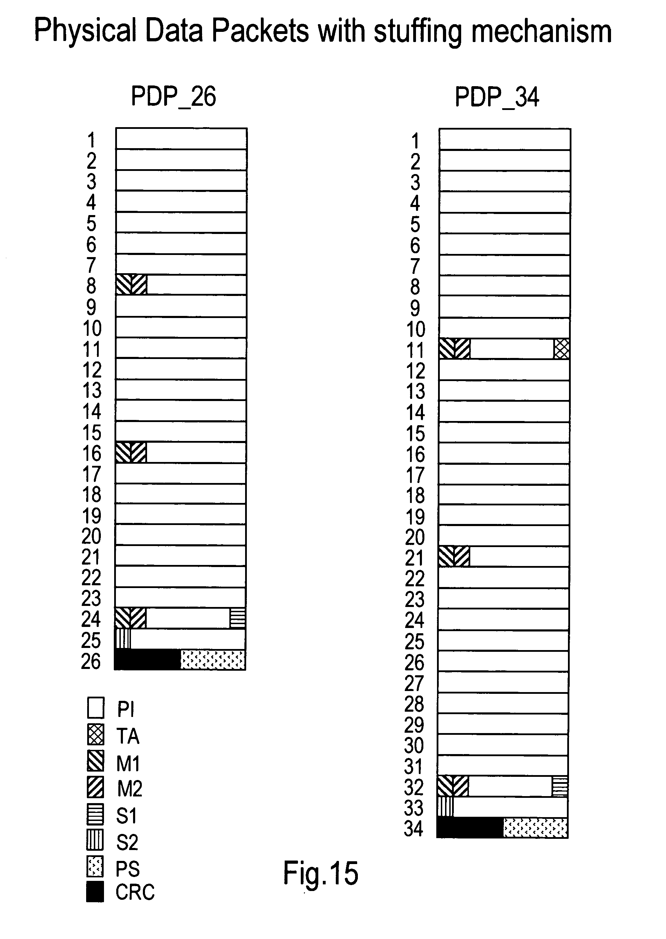

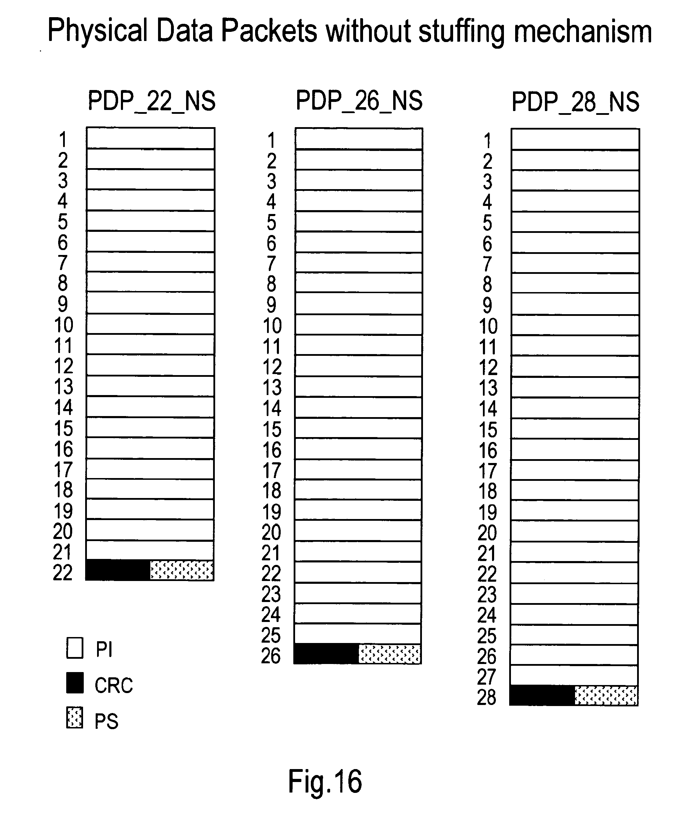

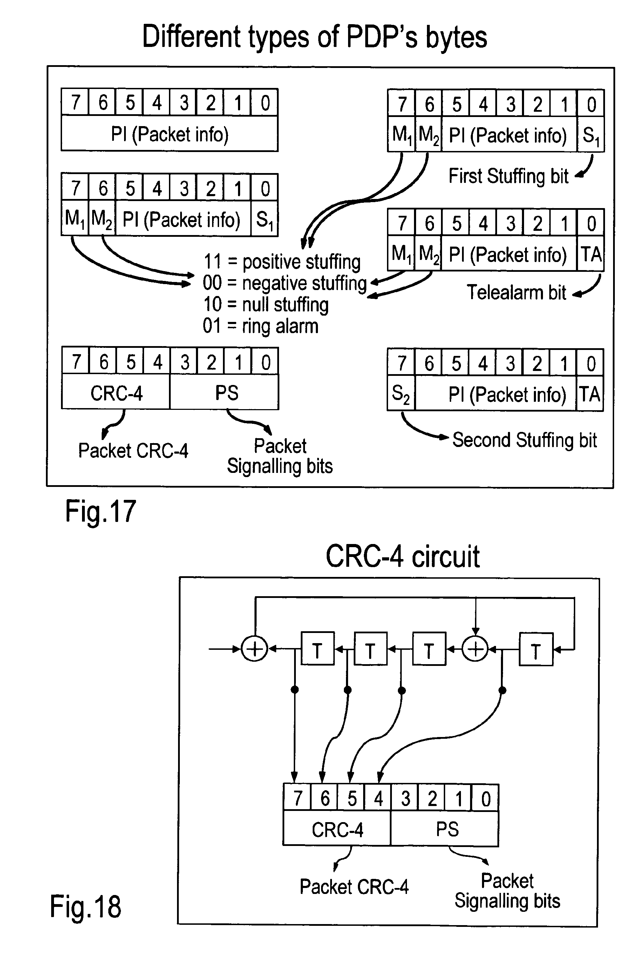

**Figures 15** and **16** describe Physical Data Packets (PDPs) for FFP IWF. These PDPs are compound of different elementary blocks divided into two classes with relation to the fact that they make provision for stuffing mechanism **(****fig.15****)** or not (**fig.16**). All bit configurations of different PDP's bytes are illustrated In **fig.17****,** where the meaning of various labels indicated in the figures is the following:
- M1, M2 => justification message's bits
- S1 => first stuffing bit;
- S2 => second stuffing bit;
- TA => tele-alarm bit;
- PI => packet info bit;
- CRC => CRC-4 bits;
- PS => Packet Signalling bits.
**Table 3** reports the code meaning of data packet's justification message bits M1, M2.

**Fig.18** represents how CRC-4 code must be calculated and inserted into the appropriate bits.

With reference to **fig.15** (left part), PDP_26 with stuffing is composed of 26 bytes (208 bits) and therefore its throughput, when packet frequency is 8 kpac/s, is 1,664 kbit/s. The insertion of one asynchronous 1.544 Mbit/s signal into one PDP_26 frame is obtained with the positive/negative justification method. Specifically a 1,544 kbit/s signal can be mapped into a 1,664 kbit/s signal according to the following map, where 192 bits are reserved for information bits (payload data) while the others 16 bits are used to:
- 6 bits for 3 couples of equal stuffing messages (each couple is repeated three times for redundancy);
- 1 bit for the S1 stuffing bit;
- 1 bit for the S2 stuffing bit;
- 4 bits for signalling transport;
- 4 bits for CRC transport.
Since S1 and S2 bits can or not transport payload data, 193±1 information bits can be inserted by means of each PDP_26 packet. In other words 1,544±8 kbit/s can be transported inside a flow of PDP_26 with packet frequency equal to 8 kpac/s (1 packet every 125 µs).

With reference to **fig.15** (right part), PDP_34 with stuffing is composed of 34 bytes (272 bits) and therefore its throughput is 2,176 kbit/s. The insertion of one asynchronous 2.048 Mbit/s signal into PDP_34 frame is obtained with the positive/negative justification method. Specifically a 2,048 kbit/s signal can be mapped into a 2,176 kbit/s signal according to the following map, where 255 bits are reserved for information bits (payload data) while the others 17 bits are used to:
- 6 bits for 3 couples of stuffing messages (each couple is repeated three times for redundancy);
- 1 bit for the S1 stuffing bit;
- 1 bit for the S2 stuffing bit;
- 1 bit tele-alarm transport;
- 4 bits for signaling transport;
- 4 bits for CRC transport.
Since S1 and S2 bits can or not transport payload data, 256±1 information bits can be inserted by means of each PDP_34. In other words 2,048±8 kbit/s can be transported inside a flow of PDP_34 with packet frequency equal to 8 kpac/s (1 packet every 125 µs).

With reference to **fig.16** (left part), PDP_22_NS without stuffing is composed of 22 bytes (176 bits) and therefore its throughput is 1,408 kbit/s; 21 bytes are reserved for information bits while the last one is used for inserting CRC-4 code of the previous bytes and Packet Signalling bits. TDM Payload throughput is 1,344 kbit/s.

With reference to **fig.16** (central part), PDP_26_NS without stuffing is composed of 26 bytes (208 bits) and therefore its throughput is 1,664 kbit/s; 25 bytes are reserved for information bits while the last one is used for inserting CRC-4 code of the previous bytes and Packet Signalling bits. TDM Payload throughput is 1,600 kbit/s.

With reference to **fig.16** (right part), PDP_28_NS without stuffing is composed of 28 bytes (224 bits) and therefore its throughput is 1,792 kbit/s; 27 bytes are reserved for information bits while the last one is used for inserting CRC-4 code of the previous bytes and Packet Signalling bits. TDM Payload throughput is 1,728 kbit/s.

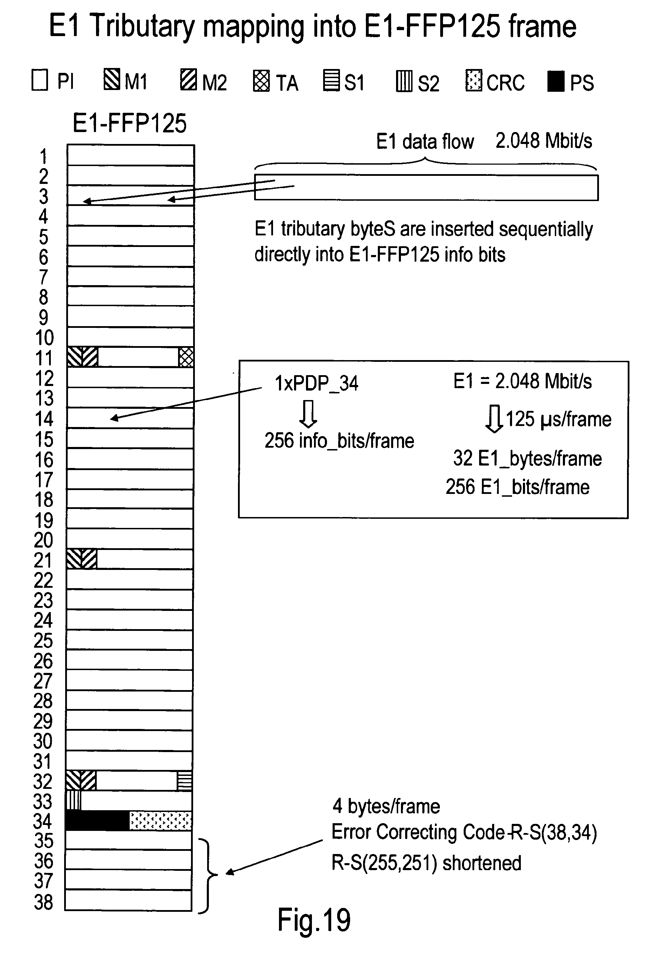

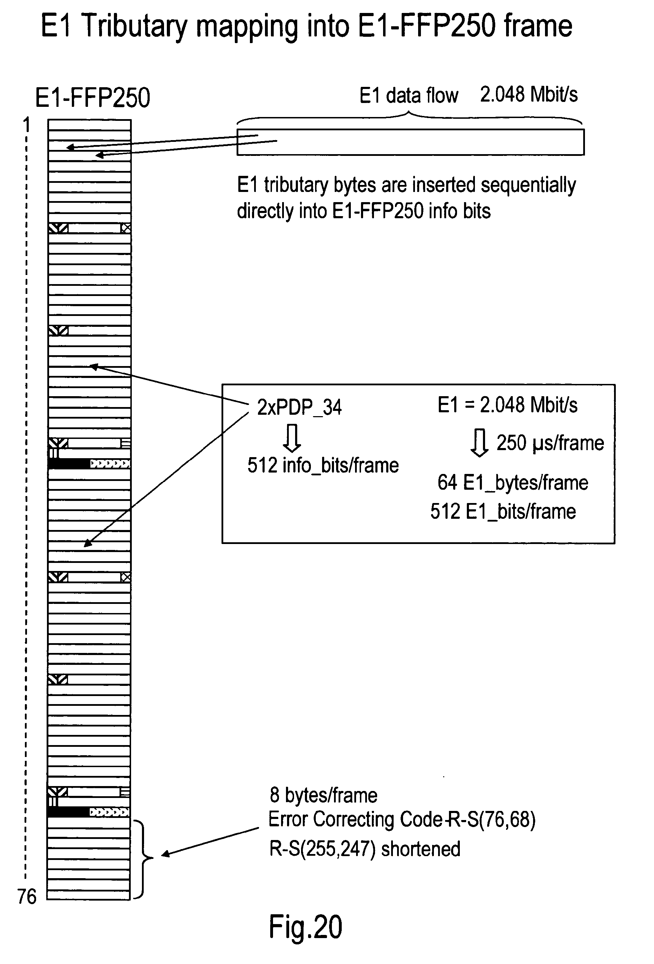

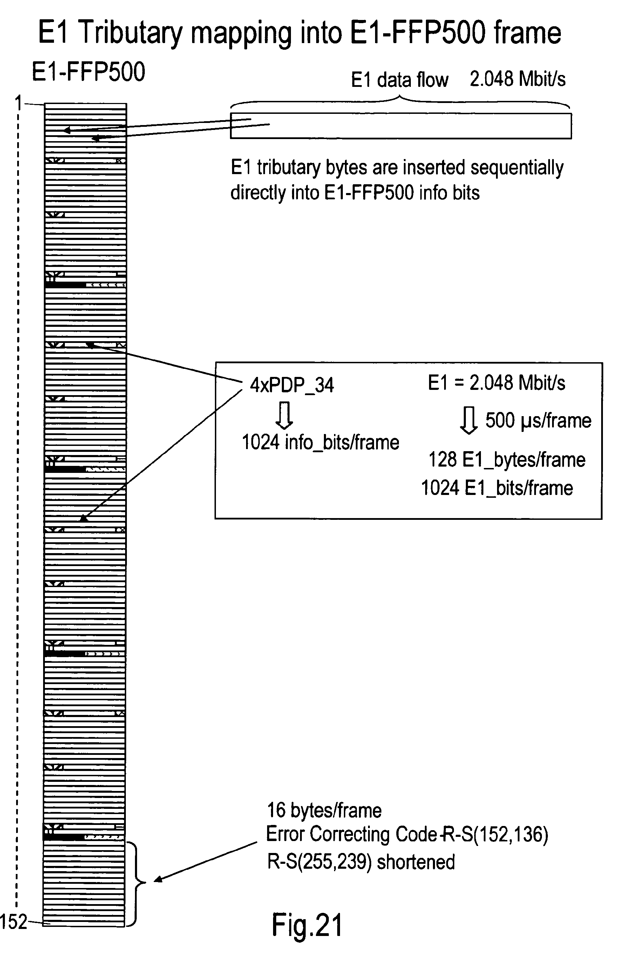

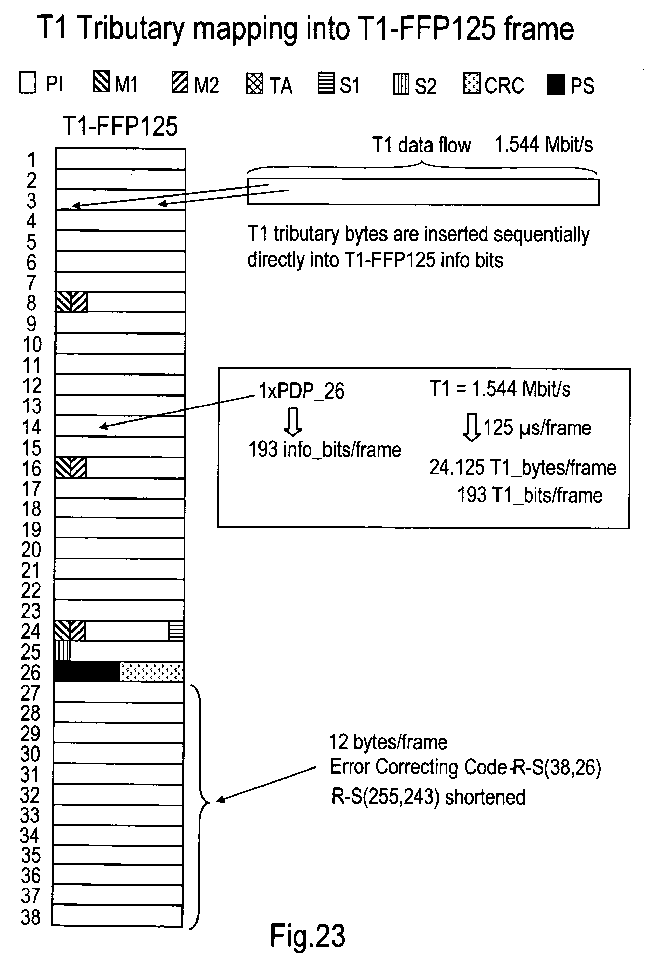

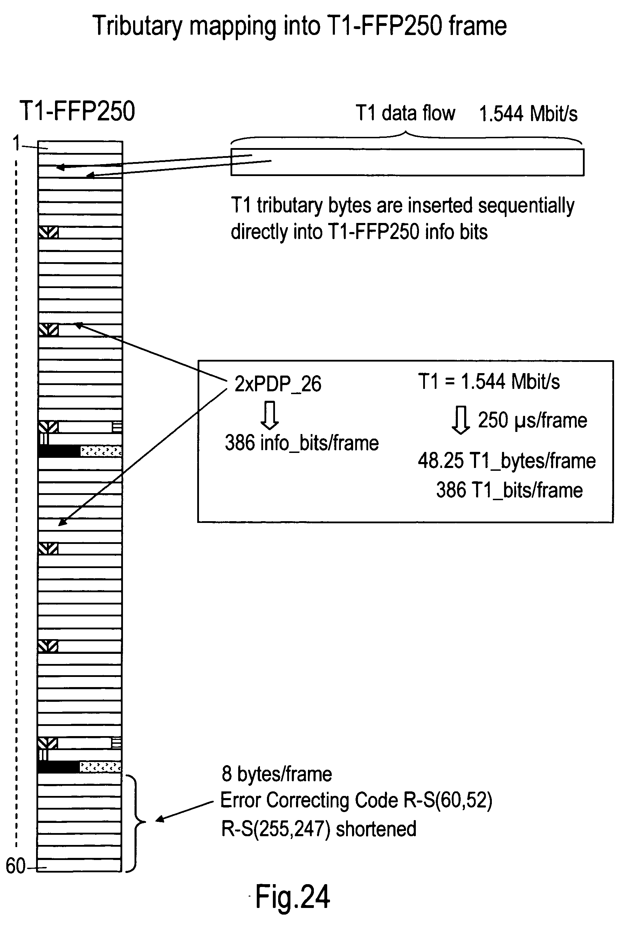

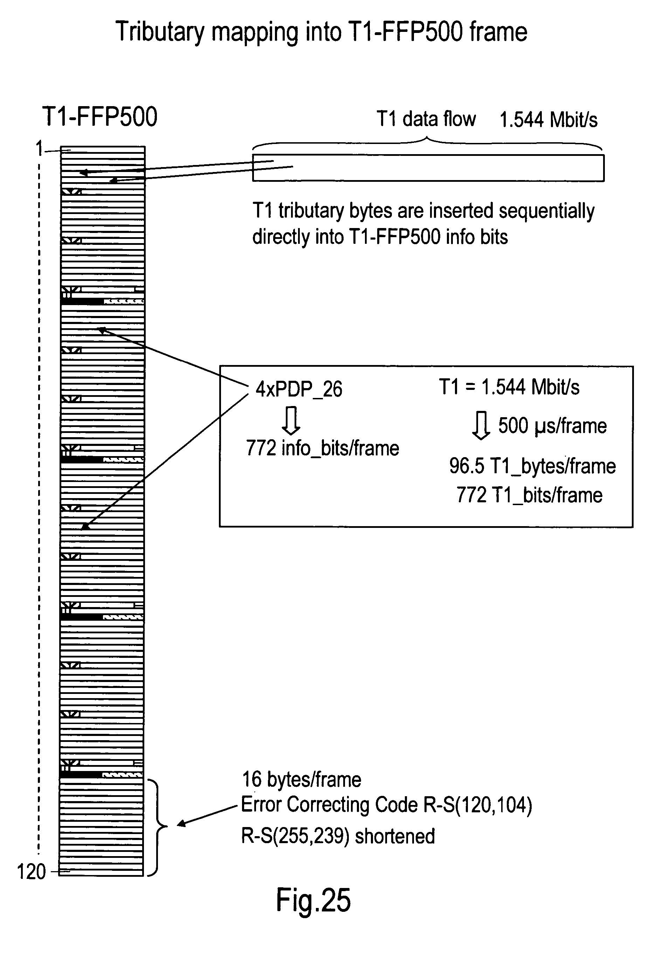

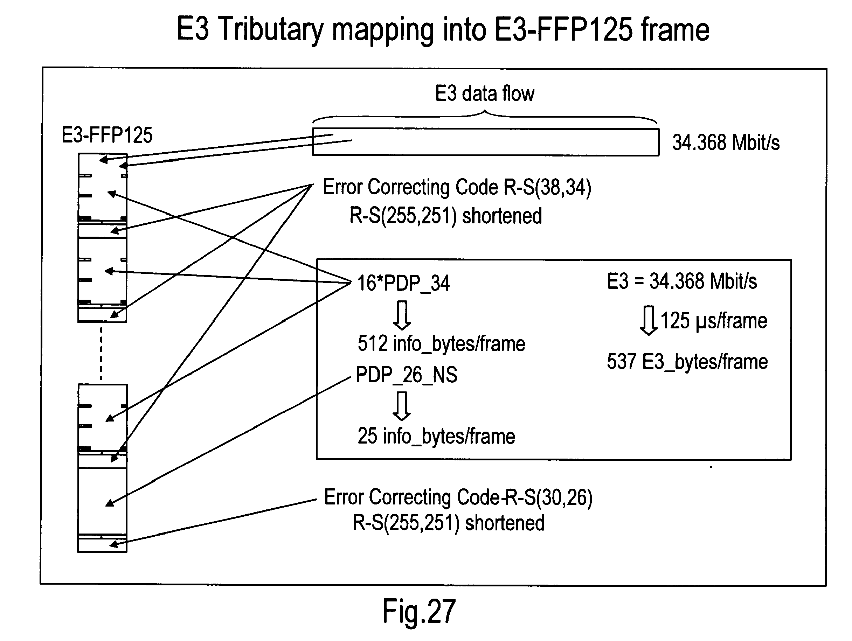

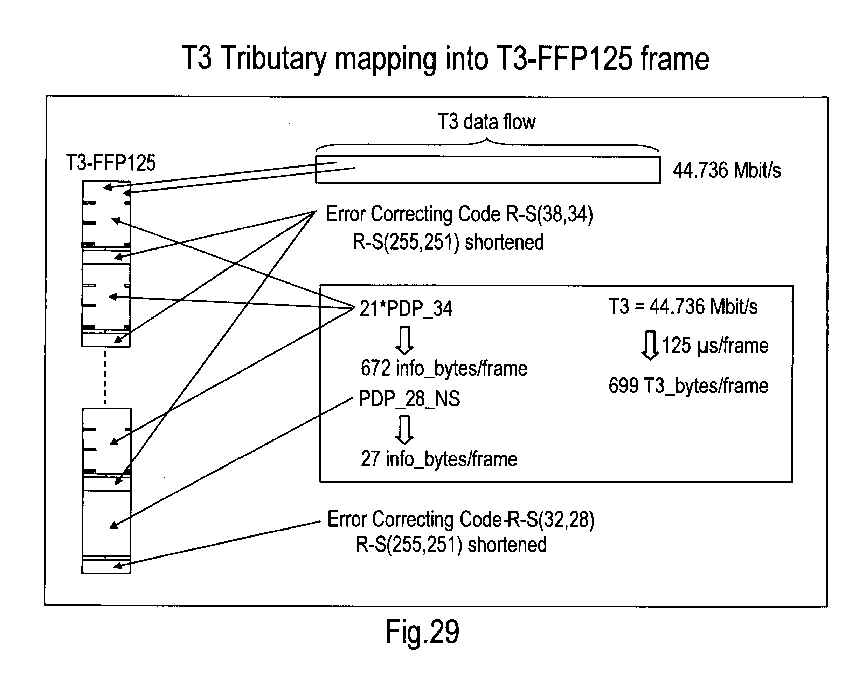

In the successive **figures 19** to **30** the Fixed Frequency Packet (FFP) strategy of the invention is put in practice for mapping the most popular frames of tributaries into packets of fixed time duration. Without limitation, the cadence of packet delivered to, or incoming at, the Ethernet interface is freely selectable to be a fixed submultiple of 8 kpac/s, and thus the relevant packet duration is a multiple of the basic period of 125 µs. According to the invention, the packet duration, and so its cadence, is a system parameter that must be kept constant in the whole network. System Information messages that are usually broadcasted inside the network should be used to set the constant packet cadence or change it. The following mapping is proposed:
**1. FFP-IWF for E1 signal** (basic frame structure at 2,048 kbit/s). The insertion of one E1 channel means the insertion on average of 2,048 bits every millisecond that is 256 bits every 125 µs. Different type of TDM payload can be realized to achieve this result. Three different solutions are proposed with respect to the frame frequency:
   - E1-FFP125 **(****fig.19****)** when packet are sent every 125 microsecond,
   - E1-FFP250 **(****fig.20****)** when packet are sent every 250 microsecond,
   - E1-FFP500 **(****fig.21****)** when packet are sent every 500 microsecond.
**2. FFP-IWF for T1 signal** (basic frame structure at 1,544 kbit/s). The insertion of one T1 channel means the insertion on average of 1,544 bits every millisecond that is 193 bits every 125 µs. Different type of TDM payload can be realized to achieve this result. Three different solutions are proposed with respect to the frame frequency:
   - T1-FFP125 **(****fig.23****)** when packet are sent every 125 microsecond,
   - T1-FFP250 **(****fig.24****)** when packet are sent every 250 microsecond,
   - T1-FFP500 **(****fig.25****)** when packet are sent every 500 microsecond.
**3. FFP-IWF for E3 signal** (basic frame structure at 34,368 kbit/s). The insertion of one E3 channel means the insertion on average of 34 368 bits every millisecond that is 537 bytes every 125 µs. The following solution is proposed:
   - E3-FFP125 (fig.27) when packet are sent every 125 microsecond.
**4. FFP-IWF for T3 signal** (basic frame structure at 44,736 kbit/s). The insertion of one T3 channel means the insertion on average of 44 736 bits every millisecond that is 699 bytes every 125 micro second. The following solution is proposed:
   - T3-FFP125 **(****fig.29****)** when packet are sent every 125 microsecond.

With reference to **fig.19****,** E1-FFP125 packet is compound adding four extra bytes to one PDP_34. The four bytes are responsible for carrying Reed-Solomon error correcting code R-S(38,34) obtained by shortening original R-S(255,251). One E1-FFP125 packet must be transmitted by source equipment every 125 µs in order to carry the 2.048 Mbit/s TDM signal. Stuffing bits must be use to accommodate the asynchronous E1 tributary into the SYNC synchronous E1-FFP125 packet flow. The four bits dedicated to Packet Signalling purpose must transport information about the number of stuffing bits carried into the last 16 E1-FFP125 packets. Packet Signalling bits will be used into TDM bound IWF in order to recover stuffing information even in presence of packet loss occurrence.

With reference to **fig.20****,** E1-FFP250 packet is compound linking up two PDP_34 blocks and adding eight extra bytes to them. The eight bytes are responsible for carrying Reed-Solomon error correcting code R-S(76,68) obtained by shortening original R-S(255,247). One E1-FFP250 packet must be transmitted by source equipment every 250 µs in order to carry the 2.048 Mbit/s TDM signal. Stuffing bits must be use to accommodate the asynchronous E1 tributary into the SYNC synchronous E1-FFP250 packet flow. The two groups of four bits dedicated to Packet Signalling purpose must transport information about the number of stuffing bits carried into the last 128 E1-FFP250 packets. Packet Signalling bits will be used into synchronous equipments to recover stuffing information even in presence of packet loss occurrence.

With reference to **fig.21****,** E1-FFP500 packet is compound linking up four PDP_34 and adding sixteen extra bytes to them. The sixteen bytes are responsible for carrying Reed-Solomon error correcting code R-S(152,136) obtained by shortening the original R-S(255,239). One E1-FFP500 packet must be transmitted by source equipment every 500 µs in order to carry the 2.048 Mbit/s TDM signal. Stuffing bits must be use to accommodate the asynchronous E1 tributary into the SYNC synchronous E1-FFP500 packet flow. The four groups of four bits dedicated to Packet Signalling purpose must transport information about the number of stuffing bits carried into the last 16,384 E1-FFP500 packets. Packet Signalling bits will be used into TDM bound IWF in order to recover stuffing information even in presence of packet loss occurrence.

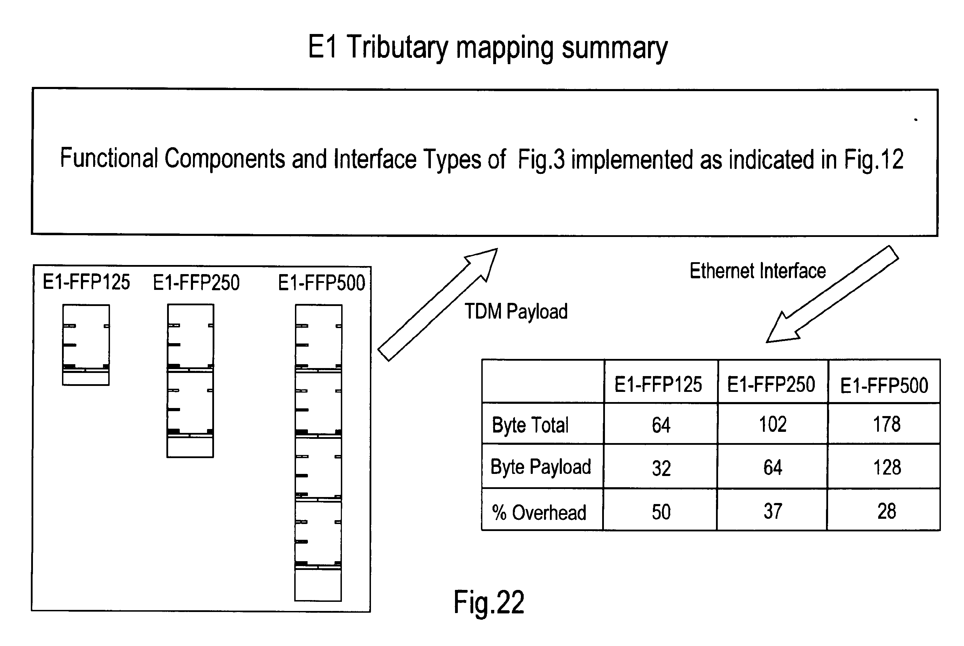

**Fig.22** resumes the E1 tributary mapping of **figures 19****,** **20****,** and **21**. Three different solutions have been pointed out to realize CESoE transport of one asynchronous E1 signal inside a MEN. Different performances can be obtained by using each of them. Since independently from the E1-FFP packet chosen, at least 26 bytes are added by the other layer to obtain the final Ethernet packet, the net band usage will be greater when E1-FFP500 is chosen. As pointed out previously also the stuffing mechanism tolerance to packet loss is greater for E1-FFP500 than for E1-FFP125. On the other hand E1-FFP125 packets give rise to smaller Ethernet packets that are easily managed by the MEN. Different choose can be done in different application in relation to the specific feature. With reference to **fig.22** we see that the percentage of overhead progressively decreases from E1-FFP125 to E1-FFP500.

With reference to **fig.23****,** T1-FFP125 packet is compound adding twelve extra bytes to one PDP_26. The twelve bytes are responsible for carrying Reed-Solomon error correcting code R-S(38,26) obtained by shortening original R-S(255,243). One T1-FFP125 packet must be transmitted by source equipment every 125 µs in order to carry the 1.544 Mbit/s TDM signal. Stuffing bits must be use to accommodate the asynchronous T1 tributary into the SYNC synchronous T1-FFP125 packet flow. The four bits dedicated to Packet Signalling purpose must transport information about the number of stuffing bits carried into the last 16 T1-FFP125 packets. Packet Signalling bits will be used into TDM bound IWF in order to recover stuffing information even in presence of packet loss occurrence.

With reference to **fig.24****,** T1-FFP250 packet is compound linking up two PDP_26 and adding eight extra bytes to them. The eight bytes are responsible for carrying Reed-Solomon error correcting code R-S(60,52) obtained by shortening original R-S(255,247). One T1-FFP250 packet must be transmitted by source equipment every 250 µs in order to carry the 1.544 Mbit/s TDM signal. Stuffing bits must be use to accommodate the asynchronous T1 tributary into the SYNC synchronous T1-FFP250 packet flow. The two groups of four bits dedicated to Packet Signalling purpose must transport information about the number of stuffing bits carried into the last 128 T1-FFP250 packets. Packet Signalling bits will be used into TDM bound IWF in order to recover stuffing information even in presence of packet loss occurrence.

With reference to **fig.25****,** T1-FFP500 packet is compound linking up four PDP_26 and adding sixteen extra bytes to them. The sixteen bytes are responsible for carrying Reed-Solomon error correcting code R-S(120,104) obtained by shortening the original R-S(255,239). One T1-FFP500 packet must be transmitted by source equipment every 500 µs in order to carry the 1.544 Mbit/s TDM signal. Stuffing bits must be use to accommodate the asynchronous T1 tributary into the SYNC synchronous T1-FFP500 packet flow. The four groups of four bits dedicated to Packet Signalling purpose must transport information about the number of stuffing bits carried into the last 16384 T1-FFP500 packets. Packet Signalling bits will be used into TDM bound IWF in order to recover stuffing information even in presence of packet loss occurrence.

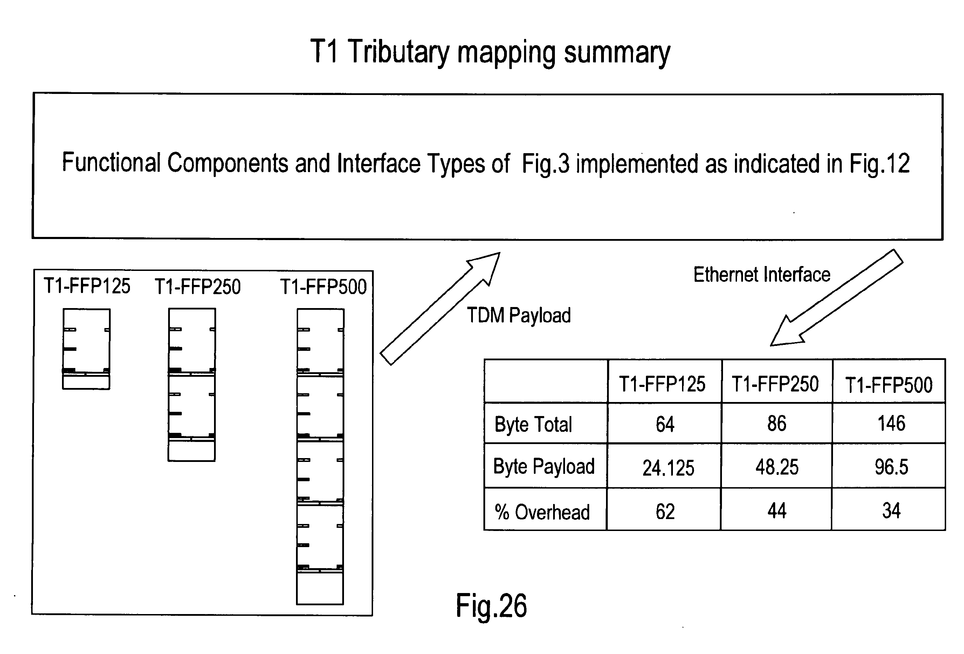

**Fig.26** resumes the T1 tributary mapping of figures **23****,** **24****,** and **25**. Three different solutions have been pointed out to realize CESoE transport of one asynchronous T1 signal inside one MEN. Different performances can be obtained by using each of them. Since independently from the T1-FFP packet chosen, at least 26 bytes are added by the other layer to obtain the final Ethernet packet, the net band usage will be greater when T1-FFP500 is chosen. As pointed out previously also the stuffing mechanism tolerance to packet loss is greater for T1-FFP500 than for T1-FFP125. On the other hand T1-FFP125 packets give rise to smaller Ethernet packets that are easily managed by the MEN. Different choose can be done in different application in relation to the specific feature. With reference to **fig.26** we see that the percentage of overhead progressively decreases from T1-FFP125 to T1-FFP500.

With reference to **fig.27****,** E3-FFP125 packet is compound linking up sixteen PDP_34 and one PDP_26_NS adding four extra bytes between them. These four bytes are responsible for carrying Reed-Solomon error correcting code R-S(38,34) obtained by shortening original R-S(255,251) related to the previous PDP_34 or Reed-Solomon error correcting code R-S(30,26) obtained by shortening original R-S(255,251) related to the previous PDP_26_NS.

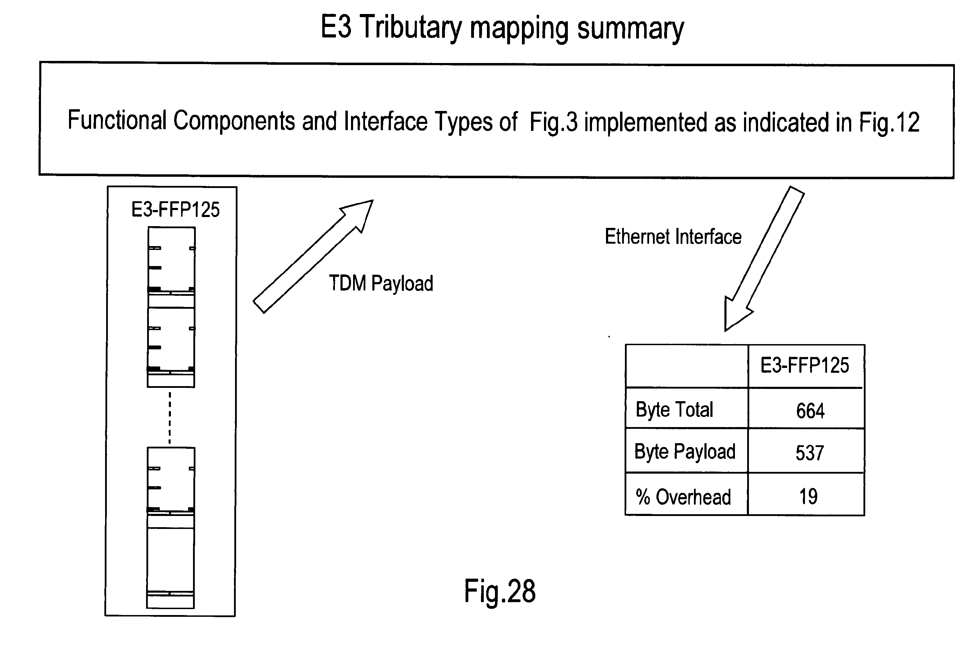

**Fig.28** resumes the E3 tributary mapping of **fig.27****.** With reference to **fig.28****,** one E3-FFP125 packet must be transmitted by source equipment every 125 µs in order to carry the 34.368 Mbit/s TDM signal. Stuffing bits must be use to accommodate the asynchronous E3 tributary into the SYNC synchronous E3-FFP125 packet flow. The first fifteen groups of four bits dedicated to Packet Signalling purpose must transport information about the number of stuffing bits carried into the last 65,536 E3-FFP125 packets. This information is repeated three times; in other word each group is repeated three times following this scheme AAABBBCCCDDDEEE Packet Signalling bits will be used into TDM bound IWF in order to recover stuffing information even in presence of packet loss occurrence.

With reference to **fig.29****,** T3-FFP125 packet is compound linking up twenty-one PDP_34 and one PDP_28_NS adding four extra bytes between them. These four bytes are responsible for carrying Reed-Solomon error correcting code R-S(38,34) obtained by shortening original R-S(255,251) related to the previous PDP_34 or Reed-Solomon error correcting code R-S(32,28) obtained by shortening original R-S(255,251) related to the previous PDP_28_NS.

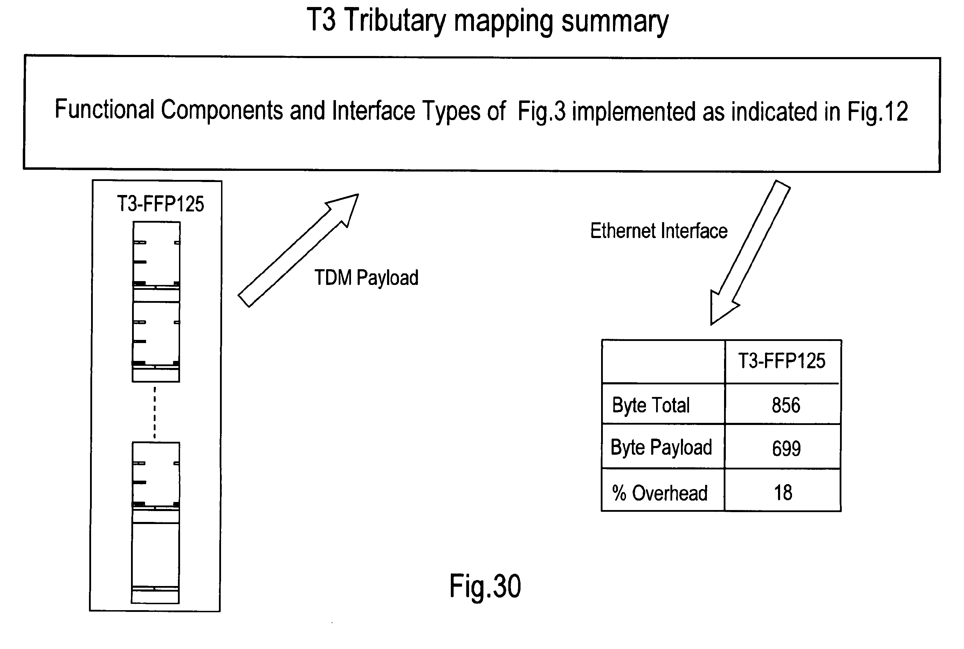

**Fig.30** resumes the T3 tributary mapping of **fig.29****.** With reference to **fig.30****,** one T3-FFP125 packet must be transmitted by source equipment every 125 µs in order to carry the 44.736 Mbit/s TDM signal. Stuffing bits must be use to accommodate the asynchronous T3 tributary into the SYNC synchronous T3-FFP125 packet flow. The first fifteen groups of four bits dedicated to Packet Signaling purpose must transport information about the number of stuffing bits carried into the last 49932 T3-FFP125 packets. This information is repeated three times; in other word each group is repeated three times following this scheme AAABBBCCCDDDEEE Packet Signalling bits will be used into TDM bound IWF in order to recover stuffing information even in presence of packet loss occurrence

### TDM PERFORMANCE MONITORING INSIDE FFP-IWF

ITU-T [G.826] Recommendation is based upon the error performance measurement of blocks. This sub clause offers a generic definition of the term "block" as follows. A block is a set of consecutive bits associated with the path; each bit belongs to one and only one block. Consecutive bits may not be contiguous in time.
ERROR PERFORMANCE EVENTS

Each block is monitored by means of an inherent Error Detection Code (EDC), e.g. Bit Interleaved Parity or Cyclic Redundancy Check. The EDC bits are physically separated from the block to which they apply. It is not normally possible to determine whether a block or its controlling EDC bits are in error. If there is a discrepancy between the EDC and its controlled block, it is always assumed that the controlled block is in error.
No specific EDC is given in this generic definition but it is recommended that for in-service monitoring purposes, future designs should be equipped with an EDC capability such that the probability to detect an error event is ≥ 90%, assuming Poisson error distribution. CRC-4 and BIP-8 are examples of EDCs currently used which fulfil this requirement. Error performance event are:
- Errored Block (EB): A block in which one or more bits are in error.
- Errored Second (ES): A one-second period with one or more errored blocks or at least one defect.
- Severely Errored Second (SES): A one-second period which contains ≥ 30% errored blocks or at least one defect. SES is a subset of ES.
- Background Block Error (BBE): An errored block not occurring as part of an SES.

### ERROR PERFORMANCE PARAMETERS

Error performance should only be evaluated whilst the path is in the available state. For a definition of the entry/exit criteria for the unavailable state, see Annex A of [G.826].
- Errored Second Ratio (ESR): The ratio of ES to total seconds in available time during a fixed measurement interval.
- Severely Errored Second Ratio (SESR): The ratio of SES to total seconds in available time during a fixed measurement interval.
- Background Block Error Ratio (BBER): The ratio of Background Block Errors (BBE) to total blocks in available time during a fixed measurement interval. The count of total blocks excludes all blocks during SESs.

### BLOCK SIZE FOR MONITORING PDH PATHS

The block sizes for monitoring in-service performance of PDH paths are given in **Table 4.**

### FFP-IWF BLOCK SIZE FOR MONITORING PDH PATHS

The block sizes for in-service performance monitoring of PDH paths, used inside FFP-IWF, are given in **Table 5.** Specific EDC chosen (CRC-4) and block dimension assure an error detection capability such that the probability to detect an error event is ≥90%. Moreover the blocks/second ration is even bigger than that defined into ITU-T Recommendation giving us a more precise time discretization. Therefore FFP_IWF CRC-4 flag is able to monitor path performance even better than requested by [G.826] Recommendation.

Although the invention has been described with particular reference to a preferred embodiment, it will be evident to those skilled in the art, that the present invention is not limited thereto, but further variations and modifications may be applied without departing from the scope of the invention as defined by the annexed claims.

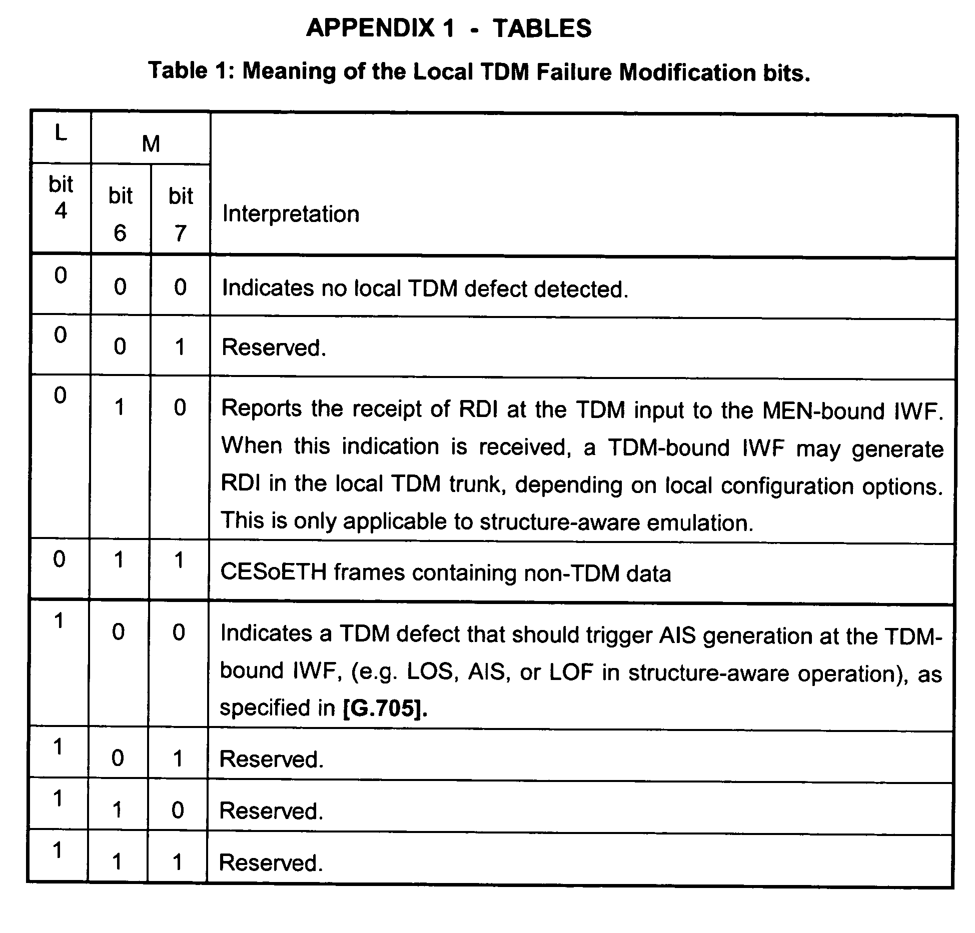

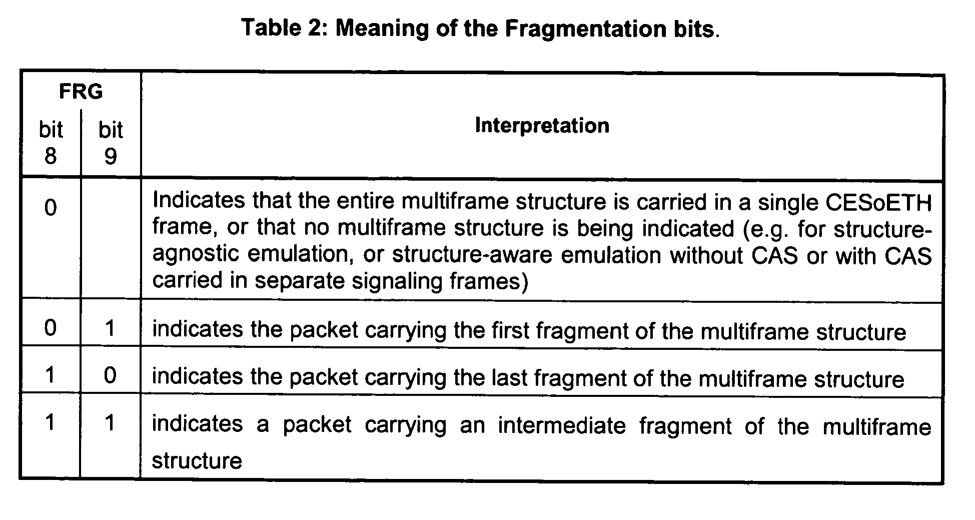

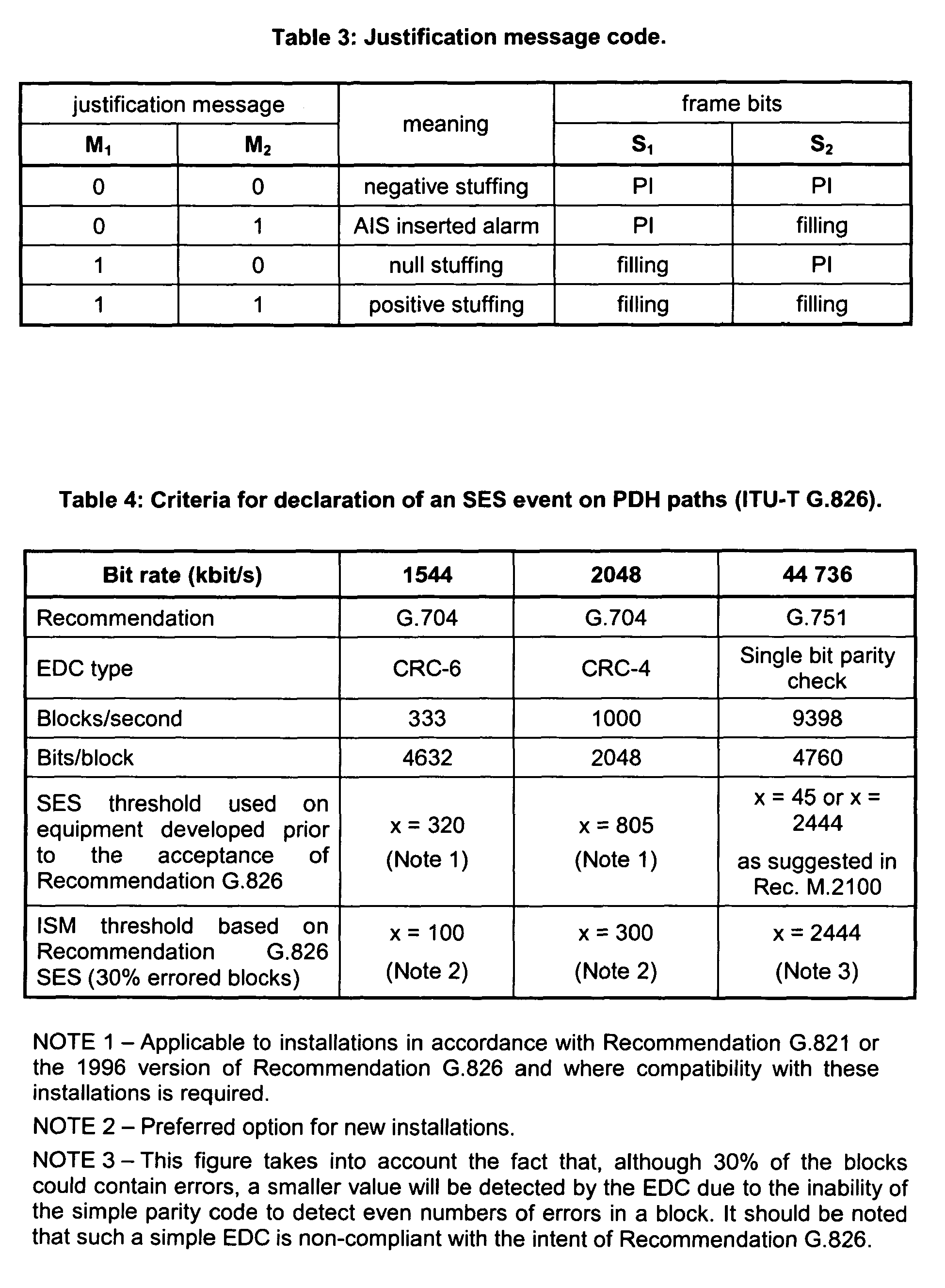

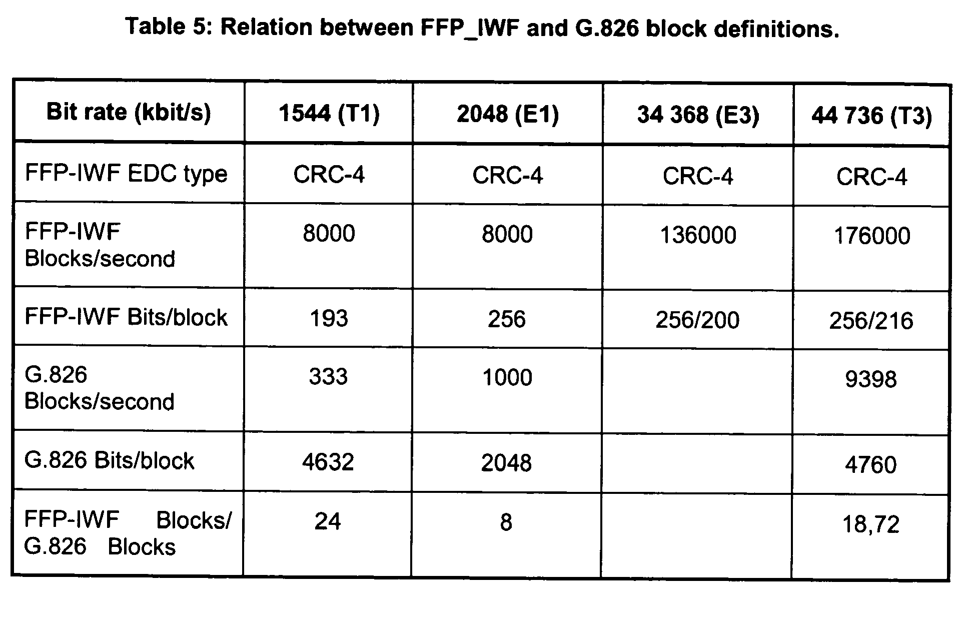

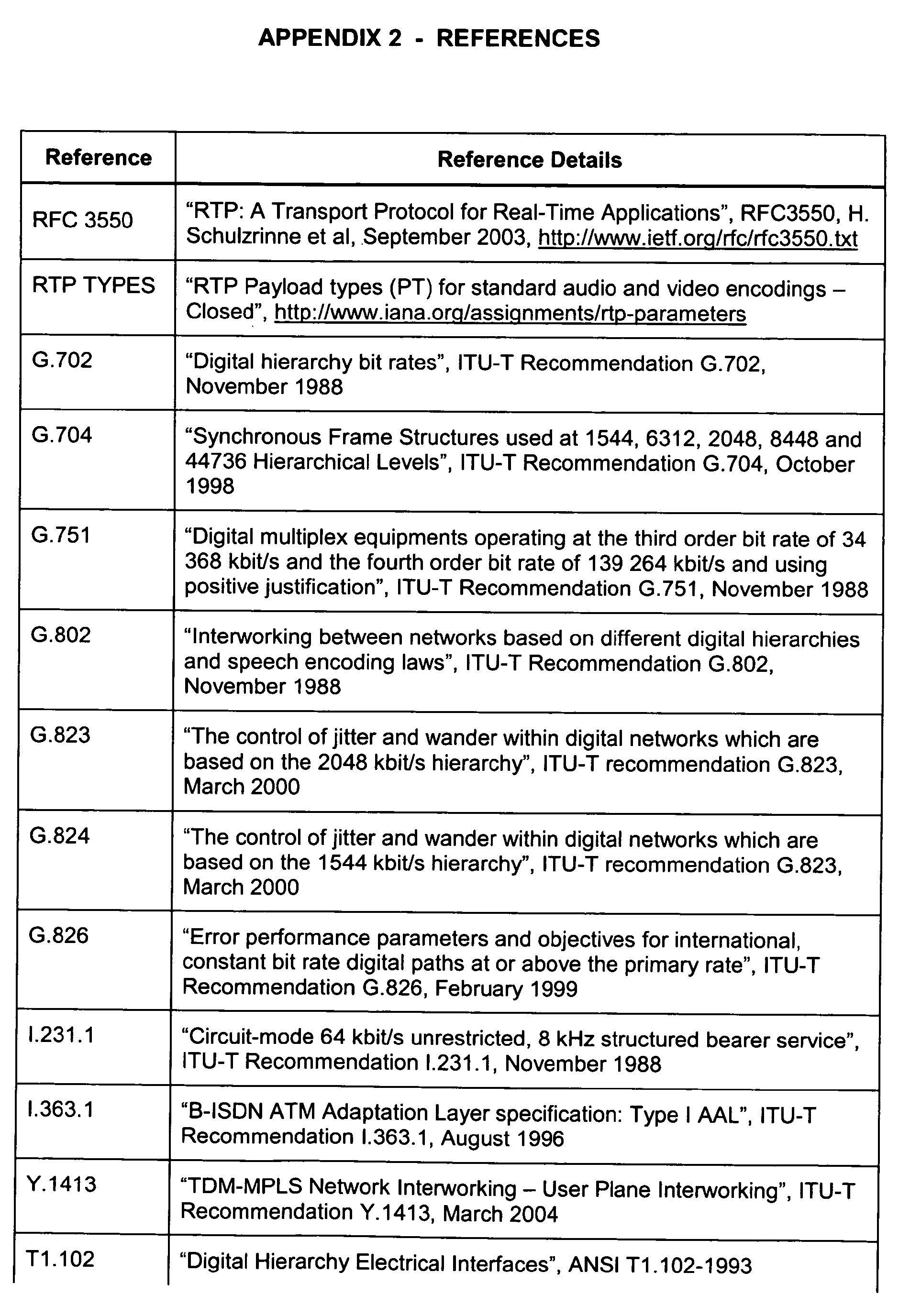

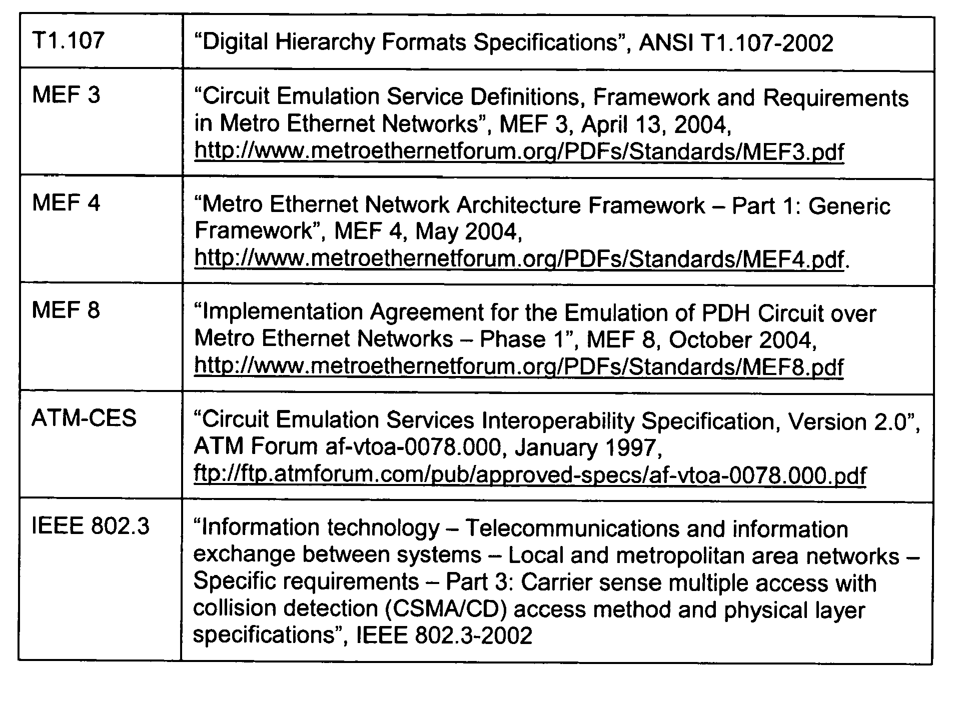

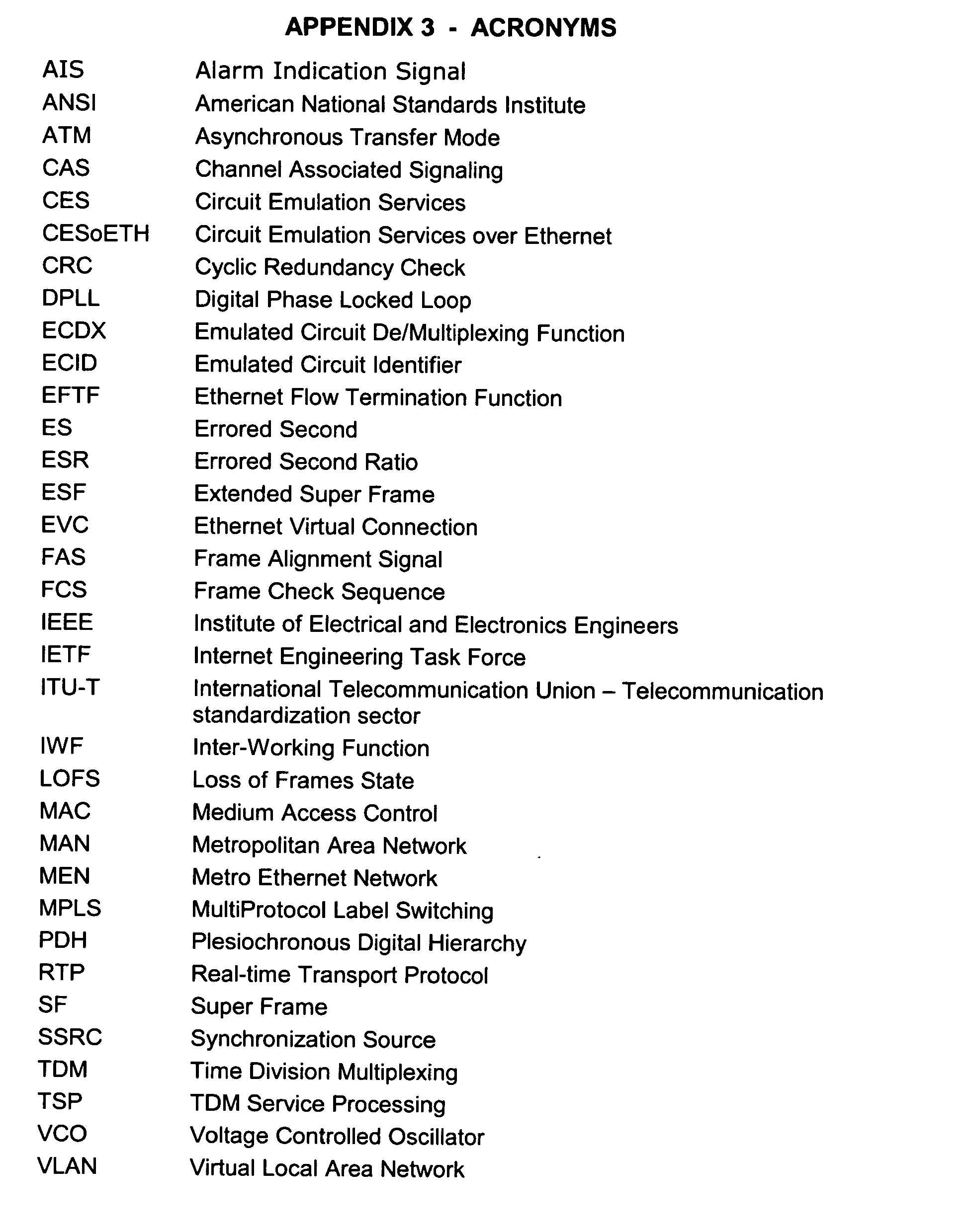

## Claims

1. Method for emulating circuit switched services through a packet data network (11) capable of handling packets with variable length, wherein the circuit switched services avails of digital transport flows arranged in sequential TDM frames, **characterized in that** includes the following steps executed at a backhaul node (ACN1) constituting an access point to the network (11) for ingress of packets:
a) providing a periodic synchronization signal (SYNC) having a period kept constant in the whole network (11);
b) writing sequentially into an elastic store (6) bits of TDM frames provided with bit-stuffing signalling bits (M1, M2, S1, S2) for synchronizing sequential reads of bits from the elastic store (6) timed by a local clock (LCK_MEN);
c) mapping at least a synchronized TDM frame (PDP_26, PDP_34, PDP_22_NS, PDP_26_NS, PDP_28_NS) into a fixed-length packet (E1-FFP..., T1-FFP..., E3-FFP125, T3-FFP125) handled by the network (11) having a time duration equal to said period kept constant along the whole network;
d) storing into a FIFO buffer memory (20) the packet data so obtained and delivering the stored packets to an interface (CES Payload) towards the network at the rate of said periodic synchronization signal (SYNC).

2. The method of claim 1, **characterized in that** the following steps are executed at a backhaul node (ACN2) constituting an access point to the network (11) for egress of packets:
e) providing a periodic synchronization signal (SYNC) having said period kept constant in the whole network;
f) accumulating outgoing packets from the network into a FIFO buffer memory (22) and reading out them at the rate of said periodic synchronization signal (SYNC);
g) writing sequentially into an elastic store (15') bits of the synchronized TDM frame and reading de-stuffed bits sequentially from the elastic store using a clock with smoothed gaps generated by a voltage controlled oscillator belonging to a phase-locked loop.

3. The method of claim 1 or 2, **characterized in that** the residual fixed-length packet space after said synchronized TDM frame is filled up with error correcting code.

4. The method of claim 2, **characterized in that** said periodic synchronization signal is distributed in the whole network.

5. The method of claim 2, **characterized in that** said periodic synchronization signal is recovered at the egress point of the network by averaging among the times of arrival of said packets.

6. The method of claim 2, **characterized in that** said FIFO buffer memory located at the egress point is set with constant length in the whole network.

7. The method of any claims from 2 to 6, **characterized in that** said period kept constant in the whole network is either a basic 125 µs frame duration or an even multiple of it.

8. The method of claim 7, **characterized in that** said synchronized TDM frame is constituted of 192 information bits, plus three identical couples of bits carrying an identical stuffing message, plus a first and a second stuffing bits, plus four bits of cyclic redundancy check, followed by four final signalling bits; all sequential bits are octet-aligned to form 26 bytes; the couples of bits carrying the stuffing message are located at the begin of bytes 8, 16, and 24, respectively; while the first stuffing bit is at the end of byte 24 and the second stuffing bit is at the begin of second last byte.

9. The method of claim 7, **characterized in that** said synchronized TDM frame is constituted of 256 information bits, plus three identical couples of bits carrying an identical stuffing message, plus a first and a second stuffing bits, plus a tele-alarm bit, plus four bits of cyclic redundancy check, followed by four final signalling bits; all sequential bits are octet-aligned to form 34 bytes; the couples of bits carrying the tele-alarm bit is located at the end of byte 11; stuffing message are located at the begin of bytes 11, 21, and 32, respectively; the first stuffing bit is at the end of byte 32 and the second stuffing bit is at the begin of second last byte.

10. The method of claim 7, **characterized in that** said synchronized TDM frame is constituted of 168 information bits, followed by four bits of cyclic redundancy check and four final signalling bits, all sequential bits are octet-aligned to form 22 bytes.

11. The method of claim 7, **characterized in that** said synchronized TDM frame is constituted of 200 information bits, followed by four bits of cyclic redundancy check and four final signalling bits, all sequential bits are octet-aligned to form 26 bytes.

12. The method of claim 7, **characterized in that** said synchronized TDM frame is constituted of 216 information bits, followed by four bits of cyclic redundancy check and four final signalling bits, all sequential bits are octet-aligned to form 28 bytes.

13. The method of claim 8, **characterized in that** said synchronized 26-octet TDM frame conveys a standard DS1 frame structure mapped into a packet of 38 octets with a time duration of 125 µs, whose last twelve octets conveys said error correcting code.

14. The method of claim 8, **characterized in that** said synchronized 26-octet TDM frame conveys a standard DS1 frame structure, and two sequential 26-octet synchronized TDM frames carrying two sequential DS1 frames are mapped into a packet of 38 octets with a time duration of 250 µs, whose last eight octets conveys said error correcting code.

15. The method of claim 8, **characterized in that** said synchronized 26-octet TDM frame conveys a standard DS1 frame structure, and four sequential 26-octet synchronized TDM frames carrying four sequential DS1 frames are mapped into a packet of 38 octets with a time duration of 500 µs, whose last sixteen octets conveys said error correcting code.

16. The method of claim 9, **characterized in that** said synchronized 34-octet TDM frame conveys a standard E1 frame structure mapped into a packet of 38 octets with a time duration of 125 µs, whose last four octets conveys said error correcting code.

17. The method of claim 9, **characterized in that** said synchronized 34-octet TDM frame conveys a standard DS1 frame structure, and two sequential 34-octet synchronized TDM frames carrying two sequential E1 frames are mapped into a packet of 38 octets with a time duration of 250 µs, whose last eight octets conveys said error correcting code.

18. The method of claim 9, **characterized in that** said synchronized 34-octet TDM frame conveys a standard E1 frame structure, and four sequential 34-octet synchronized TDM frames carrying four sequential E1 frames are mapped into a packet of 38 octets with a time duration of 500 µs, whose last sixteen octets conveys said error correcting code.

19. The method of claim 9 and 11, **characterized in that** a sequence including a synchronized 34-octet TDM frame followed by four octets of error correcting code, this couple being repeated sixteen times, plus one 24-octet TDM frame followed by four octets of error correcting code, conveys a standard E3 frame structure, and said sequence is mapped into a packet of 664 octets with a time duration of 125 µs.

20. The method of claim 8 and 12, **characterized in that** a sequence including a synchronized 34-octet TDM frame followed by four octets of error correcting code, this couple being repeated twenty-one times, plus one 28-octet TDM frame followed by four octets of error correcting code, conveys a standard T3 frame structure, and said sequence is mapped into a packet of 856 octets with a time duration of 125 µs.

21. The method of any claim from 1 to 20, **characterized in that** said packet data network (11) is based on Ethernet standard.

22. The method of any claim from 1 to 20, **characterized in that** said packet data network (11) is based on Internet Protocol standard.

23. A packet data network (11) operating according to the method of claim 2 for providing emulation of circuit switched services through data packets exchanged at the network interface of backhaul nodes (ACN1, ACN2) which provide TDM digital trunk services at the interfaces to end systems, the method including:
• a local free-running oscillator (5, 14) generating a local clock (LCK_MEN, LCK_TDM);
• synchronization means (CES_IWF) timed by said local clock for synchronizing the TDM frames entering the interface to the end systems and for recovering the signal clock of the TDM frames leaving the interface to the end systems;
• interworking means (CES_IWF) for embedding the synchronized TDM frames into packets handled by the network (11) and for extracting the synchronized TDM frames out from the packets handled by the network (11);
**characterized in that**: said backhaul nodes (ACN1, ACN2) further include:
• means for providing a periodic synchronization signal (SYNC) having a period kept constant in the whole network (11);
• a first arrangement (9, 6, 10, 21) of synchronization means configured for mapping at least a synchronized TDM frame into a fixed-length packet (E1-FFP..., T1-FFP..., E3-FFP125, T3-FFP125) having a time duration equal to said period kept constant along the whole network;
• first storage means (20) arranged as a FIFO buffer for accumulating said fixed-length packets, the first storage means (20) being timed by said periodic synchronization signal (SYNC) for delivering the packets to an interface (CES Payload) to the network.
• second storage means (22) arranged as a FIFO buffer for accumulating said fixed-length packets coming from the network (11), the second storage means (22) being timed by said periodic synchronization signal (SYNC) for reading out the packets at the rate of said periodic synchronization signal (SYNC);
• a second arrangement (18, 15', 15", 19, 23) of synchronization means configured for demapping said at least a synchronized TDM frame from the fixed-length packet.

24. The packet data network of claim 23, **characterized in that** said means for providing a periodic synchronization signal (3a, 3b) are centralized in the network.

25. The packet data network of claim 23, **characterized in that** said means for providing a periodic synchronization signal (3a, 3c) are local to said backhaul nodes (ACN1, ACN2).

26. The packet data network of claim 25, **characterized in that** said local means for providing a periodic synchronization signal (3a, 3c) include means (24) for recovering this synchronization from the average of the times of arrival of said fixed-length packets.

27. The packet data network of any claim from 23 to 26, **characterized in that** said first arrangement (9, 6, 10, 21) of synchronization means includes:
• first elastic store means (6) accumulating bits of TDM frames under the control of both a writing clock derived from TDM signal and a local reading clock (LCK_MEN);
• bit stuffing means (9, 21) controlling the first elastic store means (6);
• framing means (10) cascaded to the first elastic store means (6).

28. The packet data network of any claim from 23 to 27, **characterized in that** said second arrangement (18, 15', 15", 19, 23) of synchronization means includes:
• de-framing and de-stuffing means (18) of said fixed-length packets;
• second elastic store means (15', 15") accumulating de-stuffed bits of the at least a TDM frame;
• PLL means (19) controlled by de-stuffing signalling (MSG) for generating a reading clock of the second elastic store means (15', 15").
